# EUROPÄISCHE PATENTSCHRIFT

(11) **EP 0 662 052 B1**
(45) Veröffentlichungstag und Bekanntmachung des Hinweises auf die Patenterteilung: **17.04.1996**
(21) Anmeldenummer: 93920735.3
(22) Anmeldetag: 16.09.1993
(51) Int. Cl.: B60R 16/02, B60K 41/28

(54) **STEUERVERFAHREN FÜR DIE STEUEREINRICHTUNG EINES KRAFTFAHRZEUGANTRIEBS UND STEUEREINRICHTUNG**
PROCESS AND DEVICE FOR CONTROLLING THE CONTROL SYSTEM OF A MOTOR VEHICLE DRIVE
PROCEDE ET DISPOSITIF DE COMMANDE POUR LE SYSTEME DE COMMANDE D'UNE TRANSMISSION D'AUTOMOBILE

(30) Priorität: 23.09.1992 DE 4231821
(43) Veröffentlichungstag der Anmeldung: 12.07.1995
(73) Patentinhaber: DEERE & COMPANY, Moline, Illinois 61265 (US)
(72) Erfinder: WEISS, Heinz, D-64625 Bensheim (DE); WAHL, Christian, D-68163 Mannheim (DE)
(74) Vertreter: Feldmann, Bernhard
(86) Internationale Anmeldenummer: EP9302500
(87) Internationale Veröffentlichungsnummer: WO9406651

(56) Entgegenhaltungen:
- EP-A- 0 117 193
- EP-A- 0 388 107
- GB-A- 2 191 875

## Beschreibung

Die Erfindung betrifft ein Steuerverfahren für die Steuereinrichtung eines Kraftfahrzeuges gemäß dem Oberbegriff des Patentanspruchs 1 sowie eine hierfür geeignete Steuereinrichtung. Durch Bedienungselemente werden Signale zur Einstellung von Betriebszuständen oder -vorgaben für eine Antriebsmaschine, ein wenigstens teilweise stufenlos verstellbares Getriebe und/oder Bremsen erzeugt.

Insbesondere landwirtschaftliche, kommunale und Nutzfahrzeuge weisen neben ihren für den Fahrbetrieb erforderlichen Bedienungselementen häufig eine Vielzahl weiterer Einstellelemente, z. B. für vorn und hinten an das Fahrzeug anbaubare Geräte auf. Die Vielzahl der Bedienungs- und Einstellelemente vermindert die Übersichtlichkeit und fordert von der Bedienungsperson eine erhöhte Konzentration. Um die Bedienungsperson nicht zu ermüden und ihre Aufmerksamkeit besonders auch für längere Einsätze zu fördern, ist es wünschenswert, die Anzahl der Bedienungselemente so gering wie möglich zu halten.

Die Sicherheit des Fahrzeuges auf der Straße und die auf das Fahrzeug bezogene Aufmerksamkeit der Bedienungsperson hängen wesentlich von der möglichst direkten Betätigung von Lenkrad, Brems- und Gaspedal durch die Bedienungsperson und dem direkten Antwortverhalten des Fahrzeuges ab. Während die genannten Funktionen aus Sicherheitsgründen der Bedienungsperson nicht entzogen werden sollten, gibt es andere Bedienungsfunktionen und -elemente, die einer Automatisierung zugänglich sind, wie z. B. die Schaltung von Automatikgetrieben in Personen- und Nutzfahrzeugen.

Bei landwirtschaftlichen Maschinen und Ackerschleppern kommen zum Fahrantrieb weitere Leistungsabnehmer hinzu, wie z.B. die Zapfwellenantriebe für die vorn und hinten am Fahrzeug anbaubaren Geräte. Die Anforderungen an die Bedienungsperson steigen hierbei insofern weiter an, als jeder Leistungsabnehmer in bezug auf alle anderen Leistungsabnehmer optimal eingestellt werden sollte. Dies ist keine einfache Aufgabe für die Bedienungsperson und stellt für die Automatisierung kein triviales Problem dar.

Durch die deutsche Patentanmeldung P 4219050.9 wurde daher eine Bedienungsoberfläche für die konsolidierte Ansteuerung der Antriebsmaschine eines Fahrzeuges und eines dieser nachgeschalteten, wenigstens teilweise stufenlos verstellbaren Getriebes vorgeschlagen, bei der die Antriebsmaschine und das Getriebe jeweils eigene Ansteuerungen aufweisen. Die Bedienungsoberfläche wird als die Vereinigung der Bedienungselemente einschließlich der Verknüpfungslogik zwischen den Bedienungselementen und den anzusteuernden Aggregaten angesehen. Die Bedienungsoberfläche weist eine erste Vorwahleinrichtung (Handgas) zur Voreinstellung einer Grundlast bzw. einer Grunddrehzahl der Antriebsmaschine, die beispielsweise eine Zapfwelle unabhängig vom Fahrantrieb antreibt, eine zweite Vorwahleinrichtung (Joystick), durch die unabhängig von der Abtriebsdrehzahl der Antriebsmaschine eine gewünschte Fahrgeschwindigkeitbzw. Getriebeabtriebsdrehzahl einstellbar ist, und wenigstens eine durch eine Bedienungsperson betätigbare Bedienungseinrichtung (Fußgaspedal, Bremspedal), durch die die Voreinstellung der Grundlast bzw. der Grunddrehzahl der Antriebsmaschine und/oder die Voreinstellung der Fahrgeschwindigkeit bzw. Getriebeabtriebsdrehzahl im Betrieb veränderbar oder modulierbar ist. Die Sollwerterfassung kann elektronisch erfolgen, indem ein Handgashebel, ein Joystick, das Bremspedal und das Fußgaspedal je mit elektrischen Gebern versehen sind, die elektrische Signale entsprechend dem jeweiligen Betätigungsausschlag an eine elektronische Steuereinheit abgeben. Ferner kann die Steuereinheit die Schaltzustände von Mikroschaltern, durch die die Arbeitsmodi des Handgashebels und des Joystick einstellbar sind, sowie die Istwertsignale der Motor- oder Zapfwellendrehzahl und der Getriebeausgangsdrehzahl oder Fahrzeuggeschwindigkeit erfassen.

Durch die Vielzahl der bei einer derartigen Bedienungsoberfläche gegebenen Bedienungselemente wird es für die Bedienungsperson immer schwieriger, den Überblick zu behalten und die angemessenen Steuersignale einzustellen. Ferner nimmt mit der Vielzahl der Sensoren und Steuerkreise die Störanfälligkeit der Steuereinrichtung zu.

Die EP-A-0 338 107 beschreibt ein Steuerverfahren der eingangs genannten Art, daß bei einem Fahrzeug verwendet wird, welches kein stufenlos verstellbares Getriebe, sondern ein automatisches Schaltgetriebe aufweist. Gemäß dem bekannten Verfahren werden die Signale von Sensoren erfaßt und durch einen Diagnose-Controller auf Abnormalität geprüft. Eine Abnormalität wird über ein Bussystem zu einem Speicher-Controller übertragen, in dem eine statistische Auswertung der Abnormalität erfolgt, und der über das Bussystem ein Signal an einen Sichtanzeige-Controller abgibt, welcher seinerseits eine Sichtanzeige steuert, um das Signal anzuzeigen. Wird eine ernsthafte Abnormalität festgestellt, so erzeugt der Speicher-Controller ein Pseudosignal, durch das eine Fortsetzung des Betriebs möglich sein soll. Dieses Steuerverfahren ermöglicht in der Regel jedoch lediglich einen sehr eingeschränkten Betrieb des Fahrzeuges, wenn Steuerelemente ausgefallen sind oder Störungen auftreten.

Die der Erfindung zugrunde liegende Aufgabe wird darin gesehen, insbesondere für Kraftfahrzeuge mit einer komplexen Bedienungsoberfläche ein Steuerverfahren und eine Steuereinrichtung anzugeben, die die Bedienung erleichtern und durch die die Funktionalität des Fahrzeuges auch bei Ausfall von Steuerelementen oder Störungen bei der Verarbeitung von Steuersignalen gewährleistet werden. Das Steuerverfahren und die Steuereinrichtung sollen eine Vielzahl von Auswahlmöglichkeiten bei der Fahrzeugbedienung zulassen und insbesondere bei Ausfall einzelner oder mehrerer Bedienungselemente redundante Bedienungsmöglichkeiten zur Verfügung stellen.

Die Aufgabe wird bei einem gattungsgemäßen Steuerverfahren durch die kennzeichnenden Merkmale des Patentanspruchs 1 gelöst. Sie wird ferner durch eine Steuereinrichtung gelöst, die Bedienungselemente, diesen zugeordnete elektrische Kreise (mit Schaltern und Sensoren), wenigstens eine Elektronikeinheit, Ansteuerkreise, ein als Bussystem ausgelegtes Kommunikationssystem, eine Ausgabeeinheit und eine Eingabevorrichtung zur unmittelbaren Kommunikation mit der Ausgabeeinheit enthält, wie sie in Patentanspruch 19 angegeben sind. Diese Steuereinrichtung läßt sich durch das erfindungsgemäße Steuerverfahren so einstellen oder programmieren, daß zunächst eine Überprüfung der elektrischen Signale der Bedienungselemente sowie aller elektrischen Steuerkreise auf ihre Betriebszustände hin erfolgt. Das Ergebnis der Überprüfung wird gespeichert, diagnostiziert und anhand vorgebbarer Kriterien bewertet. Das Bewertungsergebnis wird über eine Ausgabeeinheit der Bedienungsperson zur Kenntnis gegeben.

Aufgrund des Bewertungsergebnisses wird ein Betriebsmodus automatisch aktiviert. Dabei wird jedem Bedienungselement eine bestimmte Funktionalität zugeordnet, durch die dessen Einflußnahme auf die Antriebsmaschine und das stufenlose Getriebe festgelegt wird. Ergänzend oder alternativ zur automatischen Einstellung eines Betriebsmodus kann das Bewertungsergebnis, insbesondere Vorschläge für geeignete Betriebsmodi, über die Ausgabeeinheit der Bedienungsperson zur Kenntnis gegeben werden, so daß diese über eine geeignete Eingabevorrichtung, beispielsweise Schalter oder Keyboard, den Betriebsmodus abändern oder eine Auswahl zwischen unterschiedlichen vorgeschlagenen Betriebsmodi treffen kann.

Die Feststellung der Betriebszustände kann für die Controller bei deren Eigeninitialisierung nach dem Einschalten der Spannungsversorgung und für das Bussystem bei der Netzinitialisierung, d. h. bei der Adressierung der miteinander kommunizierenden Netzmitglieder, erfolgen. Hierbei wird z. B. festgestellt, ob die Controller und das Bussystem fehlerfrei arbeiten und betriebsbereit sind, d. h. welcher definierte Anfangszustand vor Beginn des eigentlichen Programmablaufs hergestellt wurde. Die Feststellung der Betriebszustände der Sensorsignale (Einganssignale der Controller) kann dadurch erfolgen, daß diese Signale einer Plausibilitätsprüfung unterzogen werden, durch die beispielsweise festgestellt wird, ob die Signale in einem bestimmten Wertebereich liegen und ob keine Widersprüche zu anderen Eingangssignalen auftreten. Es erfolgt auch eine Überprüfung der Ansteuerkeise auf Funktionsfähigkeit.

Die festgestellten Betriebszustände werden durch Einstellung entsprechender Status-Flags markiert. Damit repräsentiert jeder Satz von Status-Flags einen bestimmten Grad der Funktionsfähigkeit des Gesamtsystems (Diagnostizierung). Die aktuelle Funktionsfähigkeit wird einer Bewertung, beispielsweise unter Anwendung einer Fuzzy-Logik-Methode, unterzogen. Aufgrund der Bewertung wird die Steuereinrichtung (neu) konfiguriert, so daß auch bei Ausfall von Mitgliedern des Gesamtsystems eine weitgehende, wenn auch möglicherweise reduzierte Funktionalität der Steuereinrichtung erhalten bleibt und eine zuverlässige Betriebsweise des Fahrzeuges ermöglicht wird.

Vorzugsweise wird anhand des Bewertungsergebnisses überprüft, ob ein Fehlerzustand bei den Einzelkomponenten der Steuereinrichtung vorliegt und ob eine vorgebbare Ersatzfunktion für einen geeigneten Betriebsmodus einsetzbar ist. Die Steuereinrichtung aktiviert gegebenenfalls diese Ersatzfunktion automatisch und zeigt sie der Bedienungsperson über die Ausgabeeinheit an.

Für den Fall, daß keine geeignete Ersatzfunktion verfügbar ist, ermittelt die Steuervorrichtung in vorteilhafter Weise anhand des Bewertungsergebnisses wenigstens eine vorgebbare Notfunktion und zeigt diese der Bedienungsperson an, so daß die Bedienungsperson über eine geeignete Eingabevorrichtung eine gewünschte Notfunktion auswählen und/oder aktivieren kann.

Ferner ist es zweckmäßig, daß die Steuervorrichtung prüft, ob ein erkannter Fehlerzustand auf einen Kalibrierfehler zurückzuführen ist. Gegebenenfalls wird automatisch eine Rekalibrierung vorgenommen.

Die Verfahrensschritte werden vorzugsweise in vorgebbaren Zeitintervallen regelmäßig wiederholt, so daß eine laufende Überprüfung der Steuereinrichtung auf Funktionalität und gegebenenfalls eine rechtzeitige Neukonfiguration der Ansteuerung erfolgt.

Gemäß einer besonders bevorzugten Ausgestaltung der Erfindung werden eine Folge von durch die Bedienungselemente vorgebbaren Einstellsignalen automatisch in einem Datenspeicher abgelegt. Die abgelegten Einstellsignale können jederzeit zur automatischen Ansteuerung des Kraftfahrzeuges wieder ausgelesen werden (Sequencing-Mode). Die Bedienungsperson braucht somit einen (komplizierten) Arbeisvorgang lediglich einmal durch Betätigung der Bedienungselemente auszuführen. Ein identischer Arbeitsvorgang kann dann zu jedem späteren Zeitpunkt aufgerufen und ausgeführt werden.

Um die Bedienungsperson in die Lage zu setzen, jederzeit in den Arbeitsvorgang einzugreifen, ist es zweckmäßig, wenn die Ansteuerungsfunktionen des Sequencing-Mode von der Bedienungsperson unterbrochen werden können und die Ansteuerung in einem durch die Bedienungsperson über die Bedienungselemente direkt steuerbaren Modus überführbar ist (Normal-Mode).

Gemäß einer bevorzugten Ausgestaltung der Erfindung weist die Elektronikeinheit Mittel auf, durch die die Sensorsignale und Untersteuerkreise zyklisch auf Vorliegen eines Fehlerzustandes überprüfbar sind. Ferner sind Mittel vorgesehen, durch die bei Vorliegen eines Fehlerzustandes der betroffene Untersteuerkreis abgeschaltet und/oder ein Ersatzsteuerkreis aktiviert wird. Dabei wertet der Ersatzsteuerkreis Sensorsignale einer anderen fehlerfrei arbeitenden Bedienungseinheit aus, um aus diesen ersatzweise geeignete Stellsignale für die Ansteuerkreise abzuleiten.

Ein Fehlerzustand liegt beispielsweise dann vor und wird als solcher durch die Elektronikeinheit erkannt, wenn ein Sensorsignal oder das Ausgangssignal eines Untersteuerkreises undefiniert ist. Das undefinierte Signal resultiert aus der Bauart des Bedienungselementes und der zugehörigen Abtastelektronik. Ein Signal ist z. B. undefiniert, wenn kein Signal vorliegt, ein Kurzschluß festgestellt wird oder das Signal nicht in einem vorgegebenen Intervall liegt. Ein Signalfehler kann auch durch Verwendung redundanter Abtastmittel zur Erfassung der Einstellage der Bedienungselemente und darauf aufbauende Plausibilitätsbetrachtungen festgestellt werden.

Die erfindungsgemäße Steuereinrichtung läßt eine sichere Bedienung des Fahrzeuges auch bei Ausfall elektrischer oder hydraulischer Komponenten zu, auch wenn dann die Bedienung eventuell eine reduzierte Funktionalität aufweist. Durch das System werden Ausfälle erkannt, und es wird für eine geeignete Abhilfe gesorgt.

Alle Maßnahmen werden vorzugsweise automatisch in einem Logbuch protokolliert und können später abgerufen werden. Sofern einige Funktionen nicht mehr einwandfrei arbeiten, wird die Bedienungsperson hiervon durch optische oder akustische Signale in Kenntnis gesetzt und gewarnt. Bei schwerwiegenden Fehlerzuständen wird der Bedienungsperson automatisch empfohlen, mit dem Fahrzeug, gegebenenfalls unter eingeschränkter Funktionalität, umgehend eine Werkstatt aufzusuchen oder das Fahrzeug abzustellen, um die Gefährdung von Fahrzeugkomponenten zu vermeiden.

Eine bevorzugte Weiterbildung der Erfindung sieht vor, daß als Bedienungselemente wenigstens eine Geschwindigkeits-Vorwahleinrichtung, beispielsweise nach Art eines Joysticks, und wenigstens ein Fußgaspedal mit zugeordneten Abtastelektroniken und Untersteuerkreisen vorgesehen sind. Dabei läßt sich durch die GeSchwindigkeits-Vorwahleinrichtung unabhängig von der Antriebsmaschinendrehzahl eine gewünschte Getriebeabtriebsdrehzahl vorgeben, die unabhängig von der aktuellen Fahrgeschwindigkeit des Fahrzeuges vorwählbar ist. Ferner ist durch das Fußgaspedal einerseits mittels seines zugeordneten Untersteuerkreises eine elektrische Übersteuerung der Vorwahleinstellung der Getriebeabtriebsdrehzahl und andererseits eine unmittelbare, beispielsweise mechanische oder hydraulische Beeinflussung der Antriebsmaschinendrehzahl möglich. Bei Vorliegen eines Fehlerzustandes der dem Fußgas und/oder der GeSchwindigkeits-Vorwahleinrichtung zugeordneten Abtastelektronik und/oder eines zugeordneten Untersteuerkreises setzt die Elektronikeinheit die von dem oder den Untersteuerkreisen abgegebenen Stellsignale auf konstante Werte, beispielsweise auf Null. Ferner wird ein Ersatzregelkreis aktiviert, der Änderungen der Antriebsmaschinendrehzahl infolge einer Fußgasbetätigung erfaßt und das Getriebe derart ansteuert, daß die Antriebsmaschinendrehzahl als Kriterium für eine Änderung der Getriebeabtriebsdrehzahl herangezogen wird.

Dieser Lösung zufolge ist auch bei Auftreten eines Fehlerzustandes in der Fußgaspedalelektrik, der Geschwindigkeits-Vorwahlelektrik oder auch bei Totalausfall der Sensorik bzw. der Verkabelung die Getriebeabtriebsdrehzahl nicht lediglich von der Einstellung der Geschwindigkeits-Vorwahleinrichtung abhängig, sondern kann durch eine Betätigung des Fußgaspedales übersteuert werden, wobei die Getriebeabtriebsdrehzahl mit zunehmender Motordrehzahl ansteigt. Durch die Erfassung der durch das Fußgaspedal unmittelbar, z. B. auf mechanische oder hydraulische Weise beeinflußbaren Antriebsmaschinendrehzahl als Getriebeeingangsgröße, die mit den von der Geschwindigkeits-Vorwahleinrichtung herrührenden Sensorsignalen zu einem Stellsignal für das Getriebe verarbeitet wird, sind eine sichere Bedienung und die Funktionstüchtigkeit des Fahrzeuges sichergestellt, auch wenn eventuell die Funktionalität reduziert ist. Die Funktionalität des Fahrzeuges stellt sich bei Auftreten eines Fehlers somit dar wie bei einem konventionellen Fahrzeug, das keine Geschwindigkeits-Vorwahlelektrik und Fußgaselektrik aufweist. Sie bleibt im kompletten Geschwindigkeitsbereich über Fußgas und Bremse weiterhin erhalten. Bei Ausfall lediglich der Fußgaselektrik kann mit der Geschwindigkeits-Vorwahleinrichtung nach wie vor jede beliebige Fahrzeuggeschwindigkeit eingestellt werden. Bei Ausfall der Geschwindigkeits-Vorwahlelektrik muß ein Reverser auch bei einer Fahrzeuggeschwindigkeit von Null km/h zwischen Vorwärts- und Rückwärtsfahrt unterscheiden können. Das Bedienungselement für die Reverserfunktion sollte daher vorzugsweise als Kippschalter ausgeführt sein.

Eine weitere bevorzugte Ausgestaltung der Erfindung sieht vor, daß als Bedienungselemente wenigstens eine Antriebsmaschinendrehzahl-Vorwahleinrichtung (Handgashebel), der wahlweise eine Abtastelektronik und ein Untersteuerkreis zugeordnet ist, und wenigstens ein Fußgashebel, dem eine Abtastelektronik und ein Untersteuerkreis zugeordnet ist, vorgesehen sind. Durch die Antriebsmaschinendrehzahl-Vorwahleinrichtung ist eine gewünschte Antriebsmaschinendrehzahl einstellbar, und durch das Fußgaspedal ist mittels des zugeordneten Untersteuerkreises eine Übersteuerung der Voreinstellung der Antriebsmaschinendrehzahl möglich. Bei Vorliegen eines Fehlerzustandes der dem Fußgashebel oder der Antriebsmaschinendrehzahl-Vorwahleinrichtung zugeordneten Abtastelektronik und/oder dem jeweils zugeordneten Untersteuerkreis setzt die Elektronikeinheit die von einem der Untersteuerkreise abgegebenen fehlerhaften Ausgangssignale auf einen konstanten Wert, beispielsweise auf Null. Ein Ersatzregelkreis wird aktiviert, der ein Stellsignal für die Antriebsmaschinendrehzahl aus dem fehlerfrei arbeitenden Untersteuerkreis ableitet.

Gemäß einer weiteren erfindungsgemäßen Ausgestaltung sind als Bedienungselemente wenigstens eine Geschwindigkeits-Vorwahleinrichtung, beispielsweise nach Art eines Joysticks, und wenigstens eine Reversiereinrichtung mit zugeordneten Abtastelektroniken und Untersteuerkreisen vorgesehen. Durch die Geschwindigkeits-Vorwahleinrichtung ist unabhängig von der Antriebsmaschinendrehzahl eine gewünschte Getriebeabtriebsdrehzahl zwischen einer maximalen Vorwärts- und einer maximalen Rückwärtsgeschwindigkeit vorwählbar. Durch die Reversiereinrichtung ist die jeweilige Fahrtrichtung bei vorgebbarer Fahrzeugsollgeschwindigkeit umkehrbar. Bei Vorliegen eines Fehlerzustandes der der Reversiereinrichtung oder der Geschwindigkeits-Vorwahleinrichtung zugeordneten Abtastelektronik und/oder des jeweils zugeordneten Untersteuerkreises unterdrückt die Elektronikeinheit die von einem der Untersteuerkreise abgegebenen fehlerhaften Stellsignale und aktiviert durch einen Ersatzregelkreis den fehlerfrei arbeitenden Untersteuerkreis als ausschließlichen Vorwärts-Rückwärts-Umschalter.

Eine weitere erfindungsgemäße Ausgestaltung sieht vor, daß als Bedienungselemente wenigstens ein Bremspedal, dem eine Abtastelektronik und ein Untersteuerkreis zugeordnet sind, vorgesehen ist. Die Elektronikeinheit wertet das gewonnene Bremssignal derart aus, daß in einem ersten Betätigungsbereich der Fußbremse die Übersteuerung einer Voreinstellung der Getriebeabtriebsdrehzahl im Sinne einer Geschwindigkeitsreduzierung (Retarder) erfolgt und mit Überschreiten eines Schwellwertes, bei dem die Wirkung der Betriebsbremsen einsetzt, das Getriebe geöffnet wird.

Der von der dem Bremspedal zugeordneten Abtastelektronik gemeldete Pedalweg wird von dem zugehörigen Unterprogramm in einen Geschwindigkeitswert umgerechnet. Dieser Wert wird einer, beispielsweise durch einen Joystick vorgewählten Geschwindigkeit überlagert, um einen reduzierten Sollwert für die Getriebeeinstellung zu bilden. Bei Betätigung des Bremspedals bis zu einem definierbaren Schwellwert erfolgt die Bremswirkung über den Retarderbetrieb des Getriebes. Dabei bleibt das Getriebe geschlossen und steht mit den Antriebsrädern in Verbindung. Der Retarderbetrieb erlaubt eine Reduzierung der voreingestellten Getriebeabtriebsdrehzahl. Bei Überschreiten des Schwellwertes wird das Getriebe geöffnet, und die Bremsfunktion geht vom Retarderbetrieb auf die Hauptbremsen des Fahrzeuges über, so daß eine Abbremsung wie bei konventionellen Fahrzeugen erfolgt. Die Bremsfunktion steht unter der ausschließlichen Kontrolle des Fahrers.

Der Bremsvorgang in der Hauptbremsanlage eines Ackerschleppers kann, wie in der DE-OS 3 837 650 beschrieben wurde, in eine Füllphase und eine Druckphase aufgeteilt sein. Der Wechsel vom Retarderbetrieb zum Hauptbremsenbetrieb fällt vorzugsweise mit diesem Übergang zusammen. Diese Überlagerung der Bremswirkungen von Retarder und Hauptbremse ermöglicht ein ruckfreies Bremsen.

Der ruckfreie Übergang zwischen Retarder- und Hauptbremsenbetrieb läßt sich vorzugsweise auch dadurch verbessern, daß das stufenlos verstellbare Getriebe beim Bremsbetrieb geöffnet, d. h. von den Antriebsrädern getrennt und syrichron zur Fahrzeuggeschwindigkeit mitgeführt wird. Damit ist es jederzeit in der Lage, übergangslos zu schließen.

Vorzugsweise steht wenigstens ein Bremspedal mit wenigstens einem Bremslichtschalter in Verbindung. Bei Vorliegen eines Fehlerzustandes der dem Bremspedal zugeordneten Abtastelektronik und/oder dem zugeordneten Untersteuerkreis setzt die Elektronikeinheit die Retarderfunktion des Getriebes außer Betrieb und aktiviert einen Ersatzsteuerkreis, der das Bremslichtsignal als Initialereignis zur Öffnung des Getriebes ansieht.

Der Umschaltpunkt zwischen Retarder- und Bremsbetrieb benötigt keine zusätzlichen Redundanzen, da bei Ausfall des Retarders die Sicherheitsfunktionen greifen und die Funktionalität des Fahrzeuges erhalten bleibt.

Weitere vorteilhafte Ausgestaltungen und Weiterbildungen der Erfindung gehen aus den Unteransprüchen hervor.

Anhand der Zeichnung werden nachfolgend die Erfindung sowie weitere Vorteile und vorteilhafte Weiterbildungen und Ausgestaltungen der Erfindung näher beschrieben und erläutert.

Es zeigt
- Fig. 1: das Blockdiagramm einer erfindungsgemäßen Steuereinrichtung und
- Fig. 2a - 2g: ein Flußdiagramm, anhand dessen das erfindungsgemäße Verfahren beschrieben wird.

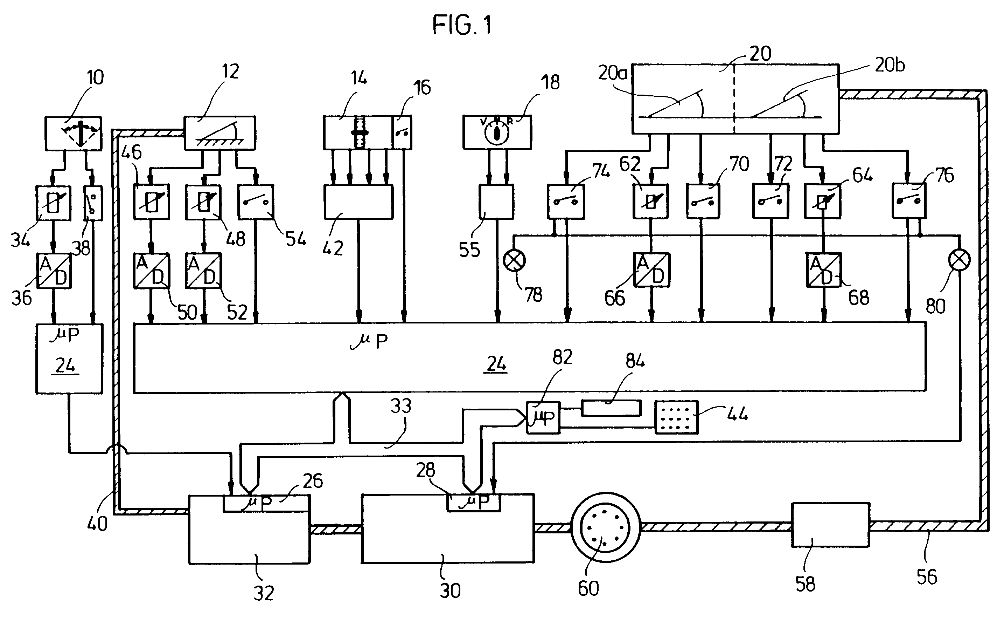

In Fig. 1 sind als Bedienungselemente ein Handgashebel 10, ein Fußgashebel 12, ein Joystick 14 mit Mikroschalter 16, eine Reversiereinrichtung 18 und als Bremspedalanordnung 20 ein linkes und ein rechtes Bremspedal 20a, 20b dargestellt. Alle von diesen Bedienungselementen ausgehenden Signale und Impulse werden von einer Elektronikeinheit, auch Jobrechner 24 genannt, erfaßt. Der Jobrechner 24 enthält Controller oder Untersteuerkreise, die den einzelnen Bedienungselementen zugeordnet sind. Die Controller des Jobrechners 24 verarbeiten die Sensorsignale und -impulse mittels programmierbarer Algorithmen und geben Stellsignale an die als Mikroprozessoren ausgebildeten Ansteuerkreise 26, 28 des stufenlos verstellbaren Getriebes 30 und der Antriebsmaschine, auch Motor 32 genannt, weiter. Für diese Algorithmen benötigte Meßdaten werden über ein serielles Bussystem 33 zur Verfügung gestellt. Die Ansteuerkreise 26, 28 sind vorzugsweise als autarke Jobrechner ausgebildet.

Der Handgashebel 10 läßt sich gemäß Fig. 1 in Pfeilrichtung verschwenken, wodurch eine gewünschte Motordrehzahl vorwählbar ist. Der vorgewählte Wert der Motordrehzahl ist durch Betätigung der Bremspedale 20 sowie des Fußgashebels 12 abänderbar. Durch einen nicht gezeigten Mikroschalter kann die Einflußnahme durch die Bremspedale 20 und den Fußgashebel 12 unterdrückt werden, so daß die Bremspedale 20 und der Fußgashebel 12 keine Auswirkung auf die Einstellung der Motordrehzahl haben. Der nicht gezeigte Mikroschalter dient damit der Umschaltung zwischen einem Vorwahlmodus, bei dem die durch den Handgashebel 10 eingestellte Motordrehzahl durch Betätigung der Bremspedale 20 oder des Fußgashebels 12 beeinflußbar ist, und einem Konstantmodus, bei dem keine solche Beeinflussung im Sinne einer Motordrehzahlerhöhung zugelassen ist. Näheres hierzu geht aus der deutschen Patentanmeldung P 4219050.9 hervor.

Grundsätzlich kann der Handgashebel 10 auf mechanische Weise mit der Motordrehzahlstelleinrichtung, beispielsweise der Einspritzpumpe verbunden sein. Im dargestellten Ausführungsbeispiel wird der Schwenkwinkel des Handgashebels 10 jedoch durch ein Potentiometer 34 erfaßt und durch einen Analog-Digital-Wandler 36 dem Jobrechner 24 zugeführt. Ferner ist im Bereich des Schwenkweges des Handgashebels 10 ein Schalter 38 befestigt, der bei Auslenkung des Handgashebels 10 eine Schaltfunktion an den Jobrechner 24 meldet. Der Jobrechner 24 errechnet aus den Eingangssignalen des Handgashebels 10 einen Motordrehzahlsollwert. Ferner stellt der Jobrechner 24 mit einem zugehörigen Controller (z. B. Unterprogramm oder Untersteuerkreis des Jobrechners) fest, ob die Eingangssignale fehlerfrei sind. Ein Fehlerzustand liegt beispielsweise dann vor und wird als solcher durch den Controller erkannt, wenn das Eingangssignal undefiniert ist, d. h., wenn die Signalleitung beispielsweise offen ist, einen Kurzschluß aufweist, wenn das Signal nicht in einem vorgegebenen Intervall liegt oder mit dem Signal des Schalters 38 im Widerspruch steht.

Die Motordrehzahl kann zusätzlich über eine mechanische Verbindung 40 mit dem Fußgashebel 12 verändert werden.

Die Motordrehzahl entspricht der Getriebeeingangsdrehzahl. Das stufenlos einstellbare Getriebe 30 reguliert die Getriebeabtriebsdrehzahl, die der Fahrzeuggeschwindigkeit entspricht, unabhängig von der Getriebeeingangsdrehzahl. Die gewünschte Solldrehzahl des Getriebeabtriebs wird durch eine Geschwindigkeits-Vorwahleinrichtung, die hier als Joystick 14 ausgebildet ist, eingestellt. Die eingestellte Geschwindigkeit fährt das stufenlos verstellbare Getriebe 30 mittels seines Ansteuerkreises 28 selbsttätig an. Es kann innerhalb des kompletten Geschwindigkeitsbereichs für Vorwärts- als auch Rückwärtsfahrt voreingestellt werden. Der Voreinstellwert kann mit dem aktuellen Geschwindigkeitswert permanent auf einer als Ausgabeeinheit dienenden Anzeige 44, beispielsweise einem Monitor, dargestellt werden.

Der durch den Joystick 14 eingestellte Geschwindigkeitswert kann zusätzlich über den Fußgashebel 12 einerseits und im Retardermodus über die Bremspedale 20 andererseits beeinflußt werden. Im Bereich des Joysticks 14 befindet sich ein Mikroschalter 16, durch den diese Einflußnahmen über den Fußgashebel 12 und die Bremspedale 20 unterdrückt werden können. Der Mikroschalter 16 dient der Umschaltung zwischen einem Vorwahlmodus, bei dem die durch den Joystick 14 eingestellte Getriebeabtriebsdrehzahl durch Betätigung des Fußgashebels 12 beeinflußbar ist, und einem Konstantmodus, bei dem keine solche Beeinflussung im Sinne einer Erhöhung der Getriebeabtriebsdrehzahl zugelassen ist, so daß die durch den Joystick 14 eingestellte Sollgeschwindigkeit als konstant programmiert ist. Bei konstant programmierter Getriebeabtriebsdrehzahl kann der durch den Joystick 14 eingestellte Drehzahlwert nur über die Hauptbremse moduliert werden. Näheres hierzu geht aus der deutschen Patentanmeldung P 4219050.9 hervor.

Der Fußgashebel 12 beeinflußt einerseits über die mechanische Verbindung 40 den Motor 32 und andererseits über die Sensorik 46, 48, 50, 52, 54, den Jobrechner 24 und den Ansteuerkreis 28 das Getriebe 30. Das Fußgas erlaubt eine Steigerung der durch den Joystick 14 voreingestellten Getriebeabtriebsdrehzahl. Ist durch den Mikroschalter 16 der Konstantmodus eingestellt, so wird durch das Fußgas ausschließlich die Motordrehzahl beeinflußt. Dies ermöglicht eine Steigerung der Drehzahl bei gleichbleibender Fahrzeuggeschwindigkeit und ist insbesondere bei Zapfwellenbetrieb vorteilhaft.

Die Einstellage des Fußgashebels 12 wird durch zwei Potentiometer 46, 48 und nachgeordnete Analog-Digital-Wandler 50, 52 erfaßt, und durch einen zugehörigen Controller (Unterprogramm, Untersteuerkreis) ausgewertet, indem beispielsweise eine Umrechnung eines Meßwertes in einen Geschwindigkeitsbetrag vorgenommen wird. Dieser Betrag wird dem durch den Joystick 14 vorgewählten Geschwindigkeitsbetrag überlagert, so daß eine Geschwindigkeitssteigerung erzielt werden kann. Ist durch den Mikroschalter 16 der Konstantmodus eingestellt, so wird die elektronische Verbindung zum Getriebe 30 außer Kraft gesetzt bzw. der von der Fußgasbetätigung resultierende Geschwindigkeitswert auf Null gesetzt.

Ferner ist ein Schalter 54 vorgesehen, der bei einer bestimmten Fußgaspedalstellung ein Schaltsignal an den Jobrechner 24 abgibt. Die beiden Potentiometer 46, 48 erlauben eine redundante Erfassung der Fußgaspedalstellung. Der Controller (Unterprogramm, Untersteuerkreis) der Fußpedalelektronik stellt anhand undefinierter oder außerhalb von vorgebbaren Grenzen liegender Signale, eines offenen Meßkreises, eines Kurzschlusses, dem Vorliegen unterschiedlicher Informationen durch die beiden Potentiometer und/oder anhand von Plausibilitätsbetrachtungen und dergleichen fest, ob Fehler der Signalerfassung oder ein Totalausfall der Fußpedalelektronik vorliegen.

Die Ausgangssignale des Joysticks 14 werden z. B. über einen Multiplexer 42 dem Jobrechner 24 zugeführt und durch einen Controller (Unterprogramm, Untersteuerkreis) ausgewertet. Während der Betätigung des Joysticks 14 liegen am Eingang des Jobrechners 24 digitale Signale an, die im Jobrechner 24 in einen Geschwindigkeitswert umgerechnet werden. Dieser Geschwindigkeitswert wird auf einer Anzeige (Display, Monitor) 44 angezeigt und dem Getriebe 30 als Sollwertgeschwindigkeit gemeldet. Der Jobrechner 24 ermittelt anhand des Unterprogrammes, ob ein Fehler bzw. Totalausfall in der Joystickelektronik vorliegt. Die Fehlererkennung erfolgt beispielsweise durch Prüfung, ob ein offener Kreis, ein Kurzschluß oder undefinierte Signale vorliegen oder anhand von Plausibilitätsbetrachtungen.

Die Reversiereinrichtung 18 dient der Umschaltung zwischen Vorwärts- und Rückwärtsfahrt. Dabei bleibt der voreingestellte Geschwindigkeitswert weiterhin gültig. Die Reversiereinrichtung 18 enthält im wesentlichen einen Schalter mit drei Schaltstellungen: Vorwärts, Neutral, Rückwärts. In Stellung Neutral hat die Reversiereinrichtung 18 keinen Einfluß auf die Steuerung, und über den Joystick 14 läßt sich der komplette Geschwindigkeitsbereich von maximaler Vorwärts- bis maximaler Rückwärtsgeschwindigkeit vorwählen. Bei Betätigung der Reversiereinrichtung 18 in die Stellung Vorwärts oder Rückwärts steht über den Joystick 14 nur der Geschwindigkeitsbereich in der durch die Reversiereinrichtung 18 vorgegebenen Richtung zur Verfügung.

Das Signal der Reversiereinrichtung 18 wird über eine Abtastelektronik 55 dem Jobrechner 24 zugeführt, welcher durch einen Controller (Unterprogramm, Untersteuerkreis) ein Fehlererkennungsprogramm aktiviert. Durch den Jobrechner 24 erfolgt eine Eingrenzung der Reversierfunktion in einen sinnvollen Geschwindigkeitsbereich. Ferner kann durch den Jobrechner 24 der zeitliche Ablauf der Umschaltung gesteuert werden, wobei eine Unterstützung durch Fußgas und Bremse erfolgen kann. Die Reversiereinstellung wird auf einer unabhängigen Vorwärts- und Rückwärtsfahrtanzeige 44 dargestellt. Die von der Reversiereinrichtung 18 ausgehenden Signale werden von dem Jobrechner 24 empfangen. Dieser meldet dem Getriebe die jeweils gültige Fahrtrichtung oder veranlaßt die Routine der Fahrtrichtungsumkehr.

Die beiden mechanisch miteinander verbindbaren Bremspedale 20a, 20b stehen über hydraulische Leitungen 56 und nicht näher dargestellte Bremsventile mit den Hauptbremsen 58 des Fahrzeuges in Verbindung, durch die eine Abbremsung der angetriebenen Achse 60 erfolgt. Die Stellung der Bremspedale 20a, 20b wird durch je ein Potentiometer 62, 64 mit nachgeordnetem Analog-Digital-Wandler 66, 68, einen Umschaltpunktschalter 70, einen Schwellwertschalter 72 und je einen Bremslichtschalter 74, 76 erfaßt und dem Jobrechner 24 mitgeteilt. Aus diesen Meßwerten und Signalen ermittelt ein Controller (Unterprogramm, Untersteuerkreis) des Jobrechners 24, ob ein Signalfehler (offener Kreis, Kurzschluß, unterschiedliche Informationen durch die beiden Potentiometer, Plausibilitätsbetrachtungen) vorliegt. Mit den beiden Potentiometern 62, 64 werden zwei unabhängige Pedalstellungssignale erzeugt. Wenn sich die beiden Signale unterscheiden, kann durch den Jobrechner 24 mit Hilfe des zusätzlichen Umschaltpunktschalters 70 und des Schwellwertschalters 72 das jeweils korrekte Signal bestimmt werden. Durch den redundanten Aufbau der Stellsignalgeber 62, 64, 70, 72, 74, 76 sowie dem Jobrechner 24 und dem Ansteuerkreis 28, die sich über das Bussystem 33 gegenseitig überwachen, ist die Erkennung eines Fehlers gewährleistet.

Die Bremslichtschalter 74, 76 sprechen an, sobald die Bremspedale 20 betätigt werden und schalten die Bremslichter 78, 80 ein. Der Jobrechner 24 entscheidet anhand der Stellung der Bremslichtschalter 74, 76, in welchem Modus (Lenk- oder Bremsmodus) sich die Bremsen befinden. Die Lenkbremsen werden auf herkömmliche Art und Weise realisiert. Im folgenden wird nur auf die Bremsfunktion bei mechanisch miteinander gekoppelten Bremspedalen 20a, 20b eingegangen.

Die Funktionalität der Bremse ist in einen Retarder- und einen Hauptbremsbereich unterteilt. Der Umschaltpunkt zwischen diesen Bereichen wird dem Jobrechner 24 durch den Umschaltpunktschalter 70 signalisiert. Im Retarderbetrieb rechnet der Jobrechner 24 die Pedalstellungssignale in einen Geschwindigkeitswert um, der über das Bussystem 33 dem Ansteuerkreis 28 des Getriebes 30 mitgeteilt wird. Der Ansteuerkreis 28 veranlaßt eine entsprechende Reduzierung der Getriebeabtriebsdrehzahl. Bei Betätigung der Bremspedale 20 über den Umschaltpunkt hinaus öffnet das Getriebe 30, und die Bremsfunktion geht auf die Hauptbremsen 58 über.

Die Motordrehzahl und die Getriebeabtriebsdrehzahl werden durch die Ansteuerkreise 26, 28 erfaßt und über das Bussystem 33 dem Jobrechner 24 zur Verfügung gestellt, der die entsprechenden Istwerte ermittelt. Die Istwerte werden für die Regelung herangezogen und können über die Anzeige 44 dargestellt werden.

An das Bussystem 33 ist ein autarker Mikroprozessor 82 angeschlossen, der mit einer Eingabeeinrichtung 84 und dem Monitor 44 in Verbindung steht. Durch die Eingabeeinrichtung 84 ist es der Bedienungsperson möglich, auf Anzeigen des Monitors 44 zu reagieren und/oder auf dem Monitor 44 angezeigte Vorgaben durch Cursor-Bedienung zu verändern oder zu bestätigen. Mit der Eingabemöglichkeit wird der Monitor 44 zu einem eigenen Eingabe- oder Bedienelement, durch das insbesondere Ersatzeingaben für ausgefallene Bedienungselemente vorgenommen werden können. Ist beispielsweise die Joystickelektronik ausgefallen, so läßt sich auf dem Monitor in einem Balkendiagramm ein simulierter Joystickeinstellwert anzeigen, dessen Betrag durch eine entsprechende Eingabe über die Eingabeeinrichtung 84 einstellbar und veränderbar ist. Dieser simulierte Einstellwert wird durch den Jobrechner 24 als Ersatzwert für die Joystickeingabe zur Steuerung des Getriebes herangezogen. Diese Ausgestaltung ist sehr vorteilhaft, da sie, falls keine andere Ausweich- oder Ersatzfunktion zur Verfügung steht, die Funktionalität des Fahrzeuges auch bei gravierenden Fehlern gewährleistet, so daß wenigstens eine Fahrt zur Werkstatt oder nach Hause möglich ist (limp home function).

Wird ein Fehler in der Fußgassensorik erkannt, so erfolgt durch den Jobrechner 24 eine Warnung an die Bedienungsperson und eine Eintragung in ein Logbuch des Jobrechners 24. Ferner ergeht vom Jobrechner 24 eine Meldung über das Bussystem 33 an die Ansteuerkreise 26, 28 des Motors 32 und des Getriebes 30, die einen Ersatzsteuerkreis in Kraft setzen. Durch den Ersatzsteuerkreis wird die Arbeitsweise des Getriebes 30 dahingehend verändert, daß die Getriebeabtriebsdrehzahl in direkter Abhängigkeit von der Motordrehzahl reguliert wird. Der Jobrechner 24 übergibt dem Getriebe 30 nur noch den per Joystick 14 eingestellten Geschwindigkeitswert, der nicht durch ein Fußgassignal moduliert wird, da letzteres als fehlerhaft erkannt wurde. Die Geschwindigkeitsmodulation per Fußgas erfolgt dann über die mechanische Verbindung 40 und die dadurch erzeugte Motordrehzahländerung, indem die Motordrehzahländerung durch den Ansteuerkreis 26 erfaßt und über das Bussystem 33 dem Ansteuerkreis 28 des Getriebes 30 mitgeteilt wird, welcher eine entsprechende Abänderung des durch den Joystick 14 vorgegebenen Getriebeabtriebsdrehzahlsollwertes vornimmt. Die Funktionalität des Fußgases stellt sich im Fehlerfall somit dar wie bei einem konventionellen Fahrzeug. Die restlichen Bedienungselemente behalten ihre Funktion bei. Insbesondere kann mit der Geschwindigkeitsvorwahl durch den Joystick 14 nach wie vor jede beliebige Fahrzeuggeschwindigkeit angefahren werden.

Stellt der Jobrechner 24 einen Fehler bzw. den Totalausfall der Joystickelektronik fest, so erfolgt eine Warnung an die Bedienungsperson und eine Eintragung in ein Logbuch des Jobrechners 24. Ferner wird das der Joystickelektronik zugeordnete Unterprogramm abgeschaltet, und es ergeht eine Meldung vom Jobrechner 24 über das Bussystem 33 an die Ansteuerkreise 26, 28 des Motors 32 und des Getriebes 30, durch die ein Ersatzsteuerkreis in Kraft gesetzt wird. Durch den Ersatzsteuerkreis wird die Arbeitsweise des Getriebes 30 dahingehend verändert, daß die Getriebeabtriebsdrehzahl in direkter Abhängigkeit von der Motordrehzahl reguliert wird. Der Jobrechner 24 setzt den durch den Joystick 14 eingestellten Geschwindigkeitssollwert auf einen festen Wert, beispielsweise auf 0 km/h oder auf den letzten korrekt empfangenen bzw. eingestellten Wert. Der Ansteuerkreis 28 des Getriebes 30 bekommt als Sollwert gegebenenfalls nur noch den Retarder- oder Fußgasanteil übergeben, den er mit der durch die Motordrehzahl eingestellten Geschwindigkeit verrechnet. Der gesamte Geschwindigkeitsbereich kann dann über Fußgas bzw. Bremse und Retarder durchfahren werden. Die Funktionalität des Fahrzeuges stellt sich somit dar wie bei einem konventionellen Fahrzeug. Die Umschaltung zwischen Vorwärts- und Rückwärtsfahrt erfolgt hierbei über die Reversiereinrichtung 18. Die Möglichkeit der Konstantprogrammierung entfällt jedoch.

Wird ein Signalfehler bzw. ein Totalausfall der Reversiereinrichtung 18 festgestellt, so erfolgt eine Warnung an die Bedienungsperson und eine Eintragung ins Logbuch. Die Reversierfunktion wird außer Kraft gesetzt. Gleichzeitig wird durch ein Ersatzprogramm (Ersatzsteuerkreis) die gleiche Funktionsweise wie in der Stellung Neutral eingestellt, bei der der Joystick 14 den kompletten Geschwindigkeitsbereich von maximaler Vorwärts- bis maximaler Rückwärtsgeschwindigkeit umfaßt. Die Bedienungsperson kann auch bei diesem Ersatzprogramm das Fahrzeug jederzeit über die Bremsen zum Stillstand bringen.

Wenn ein Signalfehlerzustand bei der Bremssignalerfassung oder der zugehörigen Elektronik festgestellt wird (z. B. Totalausfall der Pedalelektronik, Pedalweggeber sendet fehlerhafte Signale, Grenzwertschalter am Pedalweggeber ist defekt), erfolgt eine Warnung an die Bedienungsperson und eine Eintragung in ein Logbuch des Jobrechners 24. Ferner veranlaßt der Jobrechner 24 eine Stillegung der Retarderfunktion. Der Bedienungsperson steht dann immer noch die hydraulische Hauptbremse 58 zur Verfügung, so daß die Funktionalität des Fahrzeuges erhalten bleibt. In diesem Fall wird die Schaltstellung der Bremslichtschalter 74, 76 herangezogen, um bei einer Bremsbetätigung die Verbindung zwischen Getriebe 30 und der angetriebenen Achse 60 zu unterbrechen.

Ein Fehler oder Ausfall des Jobrechners 24 wird durch Ausbleiben der Botschaften bzw. Plausibilitätsbetrachtungen von dem Ansteuerkreis 28 des Getriebes 30 detektiert. Auch in diesem Fall erfolgt eine Warnung an die Bedienungsperson sowie eine Eintragung in ein Logbuch des den Fehler erkennenden Jobrechners 24. Der Jobrechner 24 wird außer Funktion gesetzt, und ein Ersatzsteuerkreis wird aktiviert, demgemäß das Getriebe 30 seine Betriebsweise so ändert, daß die Getriebeabtriebsdrehzahl in direkter Abhängigkeit von der Motordrehzahl reguliert wird. Alle Sollvorgaben werden auf fest definierte Werte gesetzt, und das Fahrzeug wird nur noch per Fußgas, Handgas (sofern dieses mechanisch mit der Motordrehzahleinstelleinrichtung verbunden ist), und Bremse gefahren. Selbst in diesem extremen Fehlerfall stellt sich die Funktionalität des Fahrzeuges dar wie bei einem konventionellen Fahrzeug.

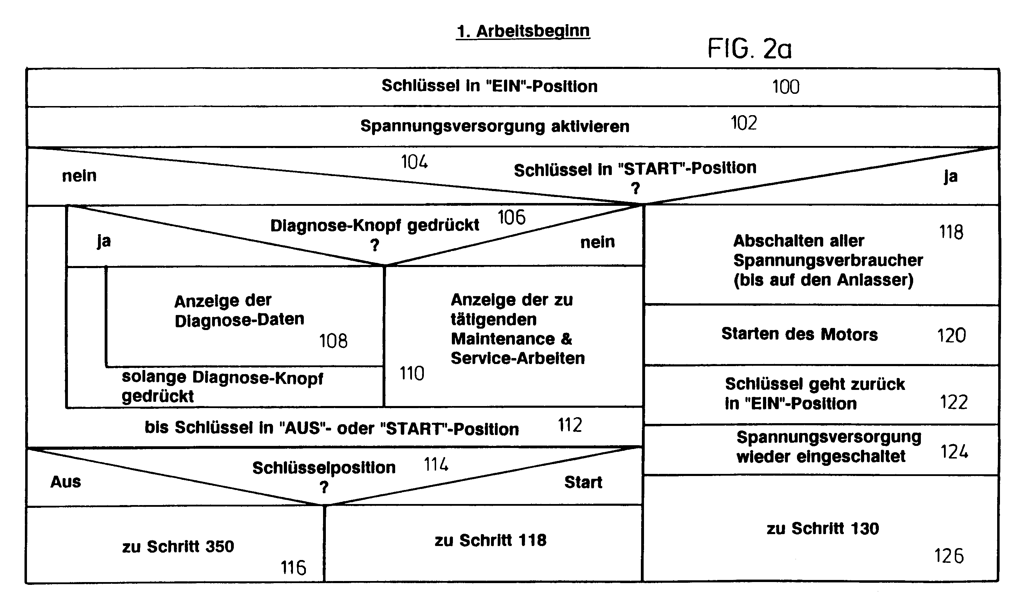

Im folgenden wird anhand des in den Fig. 2a bis 2g dargestellten Flußdiagramms das erfindungsgemäße Steuerverfahren und die Arbeitsweise der erfindungsgemäßen Steuereinrichtung beschrieben.

Aus Fig. 2a gehen die Arbeitsschritte hervor, die beim Inbetriebsetzen des Fahrzeuges ausgeführt werden. Wird der Zündschlüssel in seine "Ein"-Postion gebracht, so wird in Schritt 100 der nachfolgende Algorithmus in Gang gesetzt. Die Spannungsversorgung wird in Schritt 102 aktiviert und in Schritt 104 erfolgt eine Abfrage, ob der Zündschlüssel sich in seiner "Start"-Position befindet.

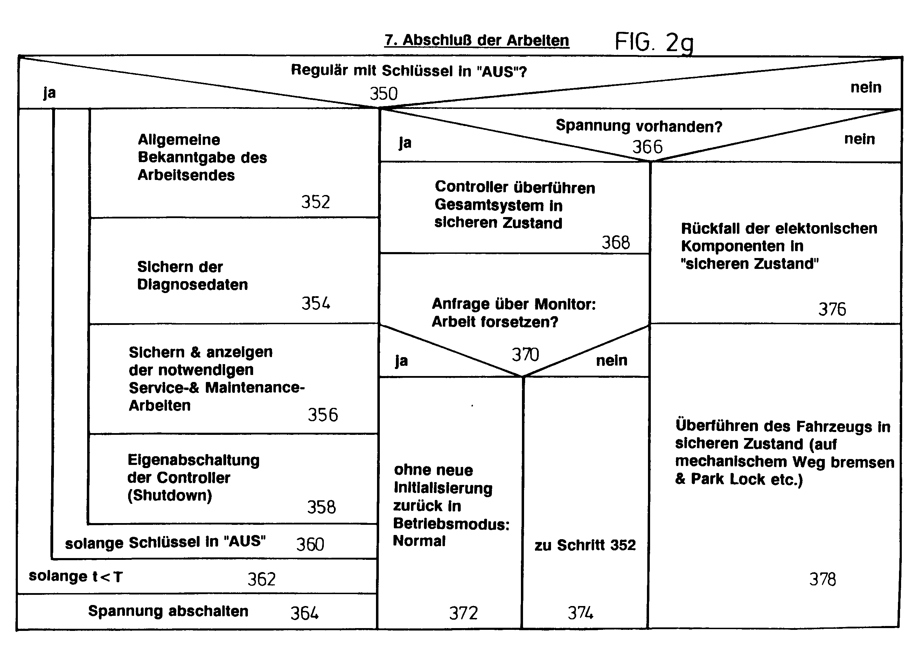

Ist dies nicht der Fall, so erfolgt in Schritt 106 die Abfrage, ob durch die Bedienungsperson ein Diagnose-Knopf betätigt ist. Solange der Diagnose-Knopf betätigt ist, wird durch Schritt 108 eine Anzeige der Diagnose-Daten des Fahrzeuges auf dem Bildschirm aktiviert. Die Diagnose-Daten beinhalten beispielsweise Informationen über die Betriebszustände und vorgegebenen Parameter, die beim letzten Betrieb des Fahrzeuges eingestellt waren. Ist der Diagnose-Knopf nicht betätigt, so wird durch Schritt 110 auf dem Bildschirm angezeigt, welche Instandhaltungs- und Service-Arbeiten anstehen. Die Abfrage der Diagnose-Knopf-Betätigung wird durch Schritt 112 so lange in regelmäßigen Zeitintervallen wiederholt, bis der Zündschlüssel gemäß der Abfrage 114 entweder in seine "Aus"-Position oder in seine "Start"-Position gebracht wurde. Befindet sich der Zündschlüssel in seiner "Aus"-Position, so wird der Algorithmus durch den Schritt 116 auf die in Fig. 2g dargestellte Abschlußroutine gelenkt.

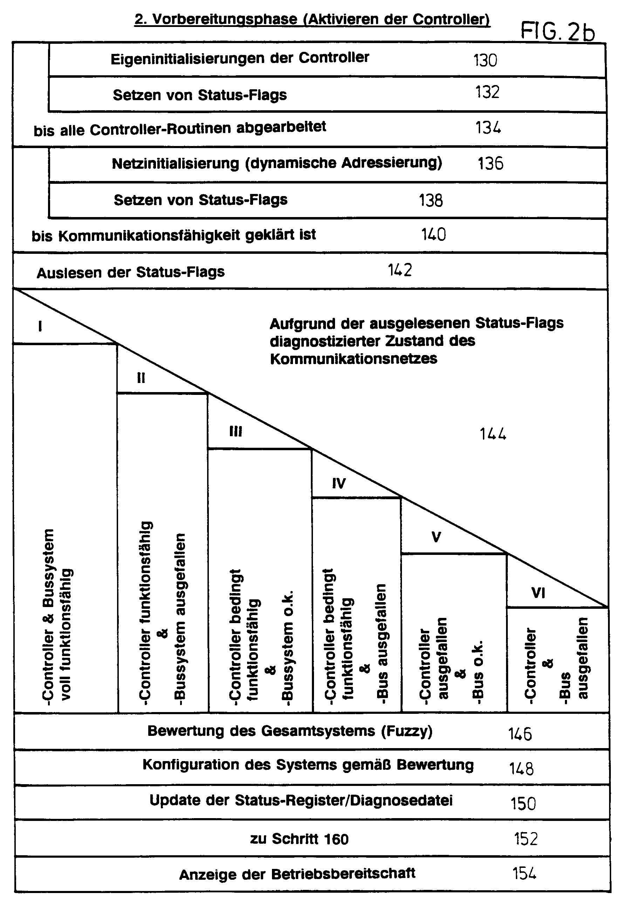

Wird der Zündschlüssel in seine "Start"-Position gebracht, so schaltet Schritt 118 alle Spannungsverbraucher, bis auf den Anlasser der Antriebsmaschine, so lange ab, bis die Antriebsmaschine in Schritt 120 gestartet ist und der Zündschlüssel gemäß der Abfrage in Schritt 122 wieder seine "Ein"-Position einnimmt. Das Einschalten der Spannungsversorgung erfolgt durch Schritt 124, und durch Schritt 126 wird der Algorithmus auf die in Fig. 2b dargestellte Routine der Vorbereitungsarbeiten geleitet.

Durch die in Fig. 2b dargestellte Vorbereitungsphase werden die Controller (Untersteuerkreise) aktiviert. In dem Schritt 130 erfolgt zunächst die Eigeninitialisierung eines ersten Controllers, bei der ein Controllerkreis der Elektronikeinheit hochgefahren wird und ein definierter Anfangszustand vor Beginn des eigentlichen Programmablaufs hergestellt wird. Hierbei auftretende Fehler und Störungen werden durch die Elektronikeinheit erfaßt (Überprüfung auf Defekte und Betriebsbereitschaft) und in Schritt 132 durch Setzen von Status-Flags festgehalten. Schritt 134 leitet die sequentielle Eigeninitialisierung aller übrigen Controller ein. Auch wenn jeder Controller für sich initialisiert wird, können die Eigeninitialisierung der Controller auch parallel durchgeführt werden.

Nachdem die Controller initialisiert sind, erfolgt durch Schritt 136 eine Netzinitialisierung, bei der jeder Controller über das Bussystem anfragt, welche weiteren Mitglieder ans Bussystem angeschlossen sind. Jedem Mitglied ordnet der Controller eine Mitgliedsadresse zu, die bei Kommunikationen anzusprechen ist. Die Adressierung erfolgt vorzugsweise dynamisch, auch wenn grundsätzlich eine statische Adressierung möglich ist. Es wird in Schritt 136 ferner festgestellt, ob das Netzwerks- oder Bussystem fehlerfrei arbeitet, oder ob beispielsweise Kabel- oder Funktionsfehler vorliegen. Entsprechend den Ergebnissen dieser Funktionsüberprüfung werden in Schritt 138 Status-Flags gesetzt, die den Zustand des autarken Controllers mit dem zugehörigen Bussystem sowie der einzelnen Kommunikationswege zwischen den angeschlossenen Mitgliedern charakterisieren. Durch Schritt 140 wird die Netzinitialisierung für jeden Controller so lange fortgesetzt, bis die Kommunikationsfähigkeit des gesamten Netzes bzw. des Bussystems vollständig geklärt ist.

Durch Schritt 142 werden die Status-Flags der Eigeninitialisierung jedes Controllers sowie der Netzinitialisierung ausgelesen. In Schritt 144 erfolgt eine Analyse der Status-Flags und damit eine Diagnose des Zustandes des Kommunikationsnetzes des betroffenen Controllers. Dabei wird der Satz der Status-Flags mit vorgebbaren Zustandsätzen verglichen, die die Funktionsfähigkeit des Gesamtsystems (Controller und Bussystem) charakterisieren. In dem in Fig. 2b dargestellten Beispiel sind die Zustandsätze I bis VI vorgegeben, denen unterschiedliche Funktionalitäten der Controller und des Bussystems zugeordnet sind. Entspricht beispielsweise der ermittelte Satz der Status-Flags dem Zustandsatz I, so bedeutet dies, daß sowohl der diagnostizierte Controller als auch das zugehörige Bussystem voll funktionsfähig sind. Stimmen hingegen die Status-Flags mit dem Zustandsatz VI überein, so signalisiert dies den Ausfall des Controllers und des zugehörigen Bussystems und damit den vollständigen Ausfall des dem Controller zugeordneten elektrischen Systems. Zwischen diesen beiden Extremen können alle denkbaren Funktionalitätsgrade durch entsprechende Vorgaben festgelegt und dann auch festgestellt werden. Auf gleiche Weise wird das Kommunikationsnetz aller Controller diagnostiziert. Das Ergebnis der Diagnose für alle Controller kann auf einem Monitor angezeigt und der Bedienungsperson zur Kenntnis gebracht werden, was jedoch in Fig. 2b nicht dargestellt wurde.

In Schritt 146 erfolgt aufgrund des Diagnoseergebnisses eine Bewertung des Gesamtsystems. Das Bewertungsergebnis soll sicherstellen, daß das Fahrzeug selbst bei Ausfall von Komponenten und Steuerfunktionen so weit wie möglich funktionsfähig bleibt und sich in jedem Fall ein sicherer Betriebsmodus ergibt.

Eine Bewertung kann beispielsweise für den Fall, daß der in Fig. 1 dargestellte elektrische Fußgaskreis ausfällt, zu dem Ergebnis führen, daß die Arbeitsweise des durch den Mikroprozessor 28 angesteuerte Getriebes 30 geändert wird. Das Getriebeübertragungsverhältnis folgt in diesem Fall nicht mehr unmittelbar (über die Sensoren 46 - 54, die Elektronikeinheit 24, den Bus 33 und den Ansteuerkreis 28) der Vorgabe des Fußgaspedals. Es wird vielmehr in direkter Abhängigkeit von der Motordrehzahl, die über die mechanische Verbindung 40 von der Fußgaspedaleinstellung abhängt, reguliert. Dabei kann die Vorgabe des Joysticks eine Grundgröße für die Einstellung des Getriebes darstellen, die durch mechanische Drehzahleinstellung durch das Fußgaspedal moduliert wird.

Eine andere Bewertung ergibt sich beispielsweise beim Ausfall des Joysticks oder der zugeordneten Elektronik. Hier wird ein Ersatzkreis ausgewählt, der die Arbeitsweise des Getriebes 30 so ändert, daß das Getriebeübertragungsverhältnis nicht mehr von der Vorgabe des Joysticks abhängt. Vielmehr wird die variable Joystickvorgabe durch einen festen Wert für die Geschwindigkeitseinstellung ersetzt. Dieser feste Wert läßt sich jedoch durch Vorgaben durch das Fußgas und die Bremse (soweit diese im Retarder-Betrieb arbeitet) modulieren.

Bei der Bewertung des Gesamtsystems und Auswahl einer Ersatzbetriebsweise kann eine Fuzzy-Logik-Methode vorteilhaft angewendet werden, durch die der Fehlerzustand analysiert und eine optimale Ersatz- oder Notfunktion ausgewählt wird.

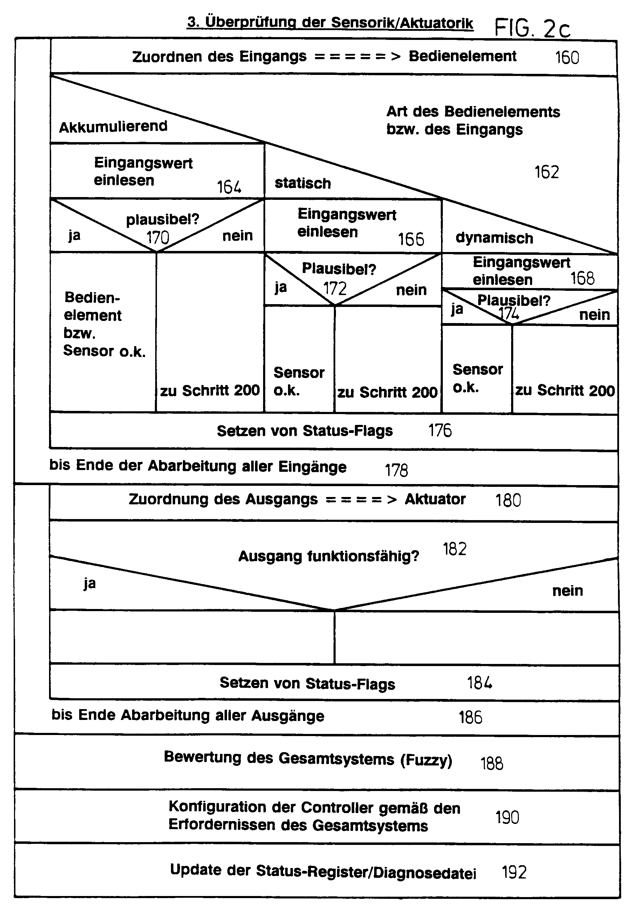

In Schritt 148 wird das System entsprechend der Bewertungsergebnisse konfiguriert, und in Schritt 150 werden die Status-Flags auf den neuen Stand gebracht. Schritt 152 aktiviert den Algorithmus gemäß Fig. 2c, in dem eine Überprüfung der Sensorik und der Aktuatorik erfolgt. Schritt 154 veranlaßt die Anzeige des Grades der Betriebsbereitschaft auf dem Monitor.

Die Überprüfung der Sensorik wird gemäß Fig. 2c mit Schritt 160 eingeleitet, in dem die Eingänge der Elektronikeinheit den unterschiedlichen Bedienungselementen bzw. deren Sensoren zugeordnet werden. In Schritt 162 wird festgestellt, welcher Art das Bedienungselement bzw. der Eingang ist, d. h. ob es sich um eine akkumulierende, statische oder dynamische Eingangsgröße handelt. Das Joysticksignal ist beispielsweise akkumulierend, da mit jeder erneuten Einstellung des nach dem Loslassen in seine Mittelstellung zurückkehrenden Joysticks das bisherige Joysticksignal erhöht bzw. vermindert wird. Eine statische Eingabe kann durch das Handgas vorgenommen werden, da das eingestellte Handgassignal der Position des Handgashebels entspricht. Da das Fußgaspedal und mit ihm sein Ausgangssignal immer in seine Ausgangslage (Null) zurückkehrt, wenn es nicht betätigt wird, handelt es sich hier um eine dynamische Einstellung.

Durch Schritt 164 werden die akkumulierenden Eingangssignale der Bedinungselementsensorik in die Elektronikeinheit eingelesen. Es folgt in Schritt 170 eine Plausibilitätsprüfung, anhand der festgestellt wird, ob die Eingangssignale in Ordnung oder fehlerhaft und daher nicht verwertbar sind. Das Ergebnis wird in Schritt 176 durch Setzen von entsprechenden Status-Flags festgehalten. Schritt 178 aktiviert das Einlesen (Schritte 166, 168) und die Plausibilitätsprüfung (Schritte 172, 174) weiterer Eingangswerte.

In Schritt 180 werden die Ausgänge der Elektronikeinheit den Aktuatoren zur Einstellung des Motors und des Getriebes zugeordnet. Es folgt eine Überprüfung der Ausgänge auf Funktionsfähigkeit in Schritt 182, und in Schritt 184 werden entsprechend dem Ergebnis dieser Überprüfung Status-Flags gesetzt. Die Aktuatorroutine wird durch Schritt 186 so lange fortgesetzt, bis alle Ausgänge überprüft sind. Auch hier schließt sich in Schritt 188 eine Bewertung des Gesamtsystems und in den Schritten 190 und 192 eine Konfiguration der Controller gemäß den Ergebnissen der Bewertung sowie eine Aktualisierung der Status-Flags an, wie bereits in ähnlichem Zusammenhang anhand der Schritte 146, 148 und 150 erläutert wurde.

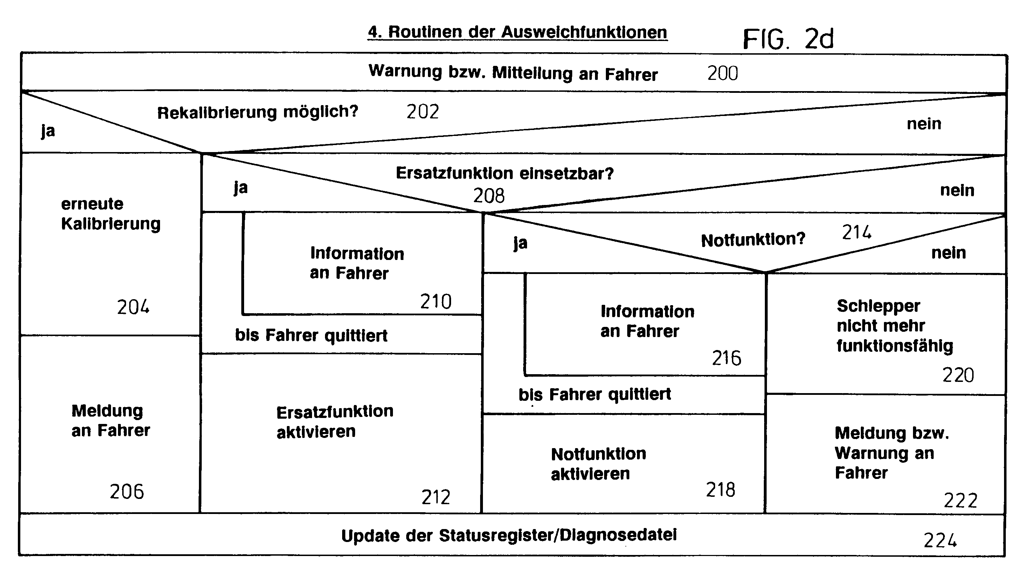

In Fig. 2d ist die Routine der Ausweichfunktionen dargestellt, die bei Feststellung einer Störung oder eines Fehlers abgearbeitet wird.

Zunächst wird in Schritt 200 über den Monitor oder dergleichen eine Warnmeldung an die Bedienungsperson abgesetzt, aus der diese die Art des Fehlers erkennen kann (Warnfunktion). Dann wird in Schritt 202 überprüft, ob der Fehler auf eine fehlerhafte Kalibrierung eines Meßwertes (z. B. Verschiebung des Nullpunktes aufgrund einer mechanischen Dejustage des Sensors) zurückzuführen ist und sich durch eine Rekalibrierung beheben läßt. Ist dies der Fall, so kann in Schritt 204 eine Rekalibrierung erfolgen. Schritt 206 gibt eine entsprechende Meldung an die Bedienungsperson ab, die durch eine geeignete Eingabe (Knopfdruck) die neue Kalibrierung bestätigen kann. Hieran schließt sich eine erneute Plausibilitätsprüfung an.

Ist eine Rekalibrierung nicht möglich, so wird in Schritt 208 festgestellt, ob eine geeignete Ersatzfunktion zur Verfügung steht, die einen sicheren Betrieb des Fahrzeuges bei vergleichbarer oder eingeschränkter Funktionalität ermöglicht. Ist dies der Fall, so wird durch Schritt 210 über einen Monitor eine Meldung an die Bedienungsperson abgegeben, aus der diese die Art der Ersatzfunktion erkennen kann, um gegebenenfalls die Bedienungsweise des Fahrzeuges auf diese Ersatzfunktion anpassen zu können. Die Meldung steht so lange an, bis die Bedienungsperson diese durch eine Eingabe quittiert. Durch Schritt 212 wird die Ersatzfunktion aktiviert. Die Ersatzfunktion kann entweder automatisch aktiviert werden (wenn beispielsweise das Handgas oder die zugehörige Elektronik ausfällt, übernimmt automatisch das Fußgas eine entsprechende Funktion), oder sie kann durch die Bedienungsperson vorgegeben werden (fällt beispielsweise der Geschwindigkeitsradarsensor aus, so kann die Bedienungsperson als Ersatzsignal das der Drehzahlmessung auswählen).

Steht keine Ersatzfunktion zur Verfügung, so prüft Schritt 214, ob eine Notfunktion zur Verfügung steht. Ist dies der Fall, so erfolgt durch Schritt 216 eine Meldung an die Bedienungsperson und in Schritt 218 die Aktivierung der Notfunktion.

Die Notfunktion kann realisiert werden, indem die Einstellung wenigstens eines Bedienungselementes auf dem Monitor als Balkendiagramm dargestellt wird. Durch eine Tastatur kann die Bedienungsperson einen Cursor auf einem Balken beliebig verschieben und mit diesem eine beliebige Einstellung für das Bedienungselement simulieren. Diese Einstellung ersetzt den Sensoreingangswert für die Elektronikeinheit und dient als Vorgabe für die Aktuatoren.

Ist keine Notfunktion verfügbar, so wird durch Schritt 220 die Nichtfunktionsfähigkeit des Fahrzeuges festgestellt, und die Antriebsaggregate werden von dem Antriebsstrang getrennt. In Schritt 222 wird dieser Ausfall an die Bedienungsperson gemeldet.

Das Ergebnis der in Fig. 2d dargestellten Routine wird in Schritt 224 in dem Statusregister, das die Status-Flags enthält, abgelegt. Ferner erfolgt eine Aktualisierung der Diagnosedatei (Logbuch), die von der Bedienungsperson abrufbar ist, um anstehende Reparatur- oder Wartungsarbeiten abzufragen.

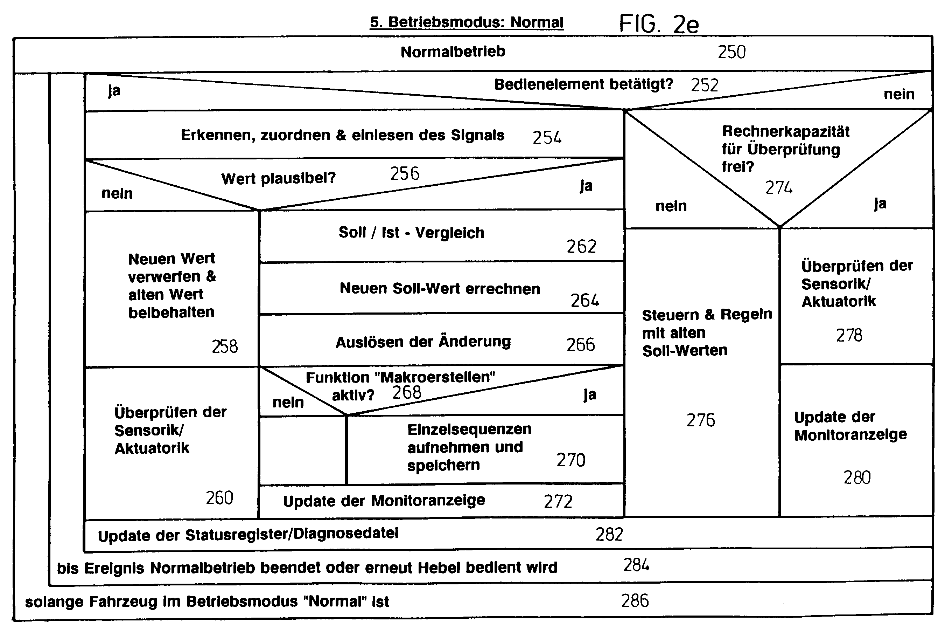

Fig. 2e stellt das Flußdiagramm für einen normalen Betriebsmodus dar, bei dem das Fahrzeug unmittelbar von der Bedienungsperson durch Betätigung der Bedienungselemente betrieben wird. In Schritt 250 wird zunächst geprüft, ob der Normalbetrieb durch die Bedienungsperson vorgegeben wurde. Ist dies der Fall, so erfolgt in Schritt 252 die Abfrage, ob eines der Bedienungselemente betätigt wurde, d. h. ob sich ein Sensorsignal verändert hat. Trifft dies zu, so werden durch Schritt 254 die Signale erkannt, zugeordnet und eingelesen. Es folgt, in der bereits beschriebenen Weise eine Plausibilitätsprüfung der Eingangssignale in Schritt 256. Bei negativem Prüfungsergebnis wird in Schritt 258 der neue Wert verworfen und der alte Wert beibehalten. Es schließt sich in Schritt 260 eine Überprüfung der Sensorik und Aktuatorik gemäß Fig. 2c an.

Bei positiver Plausibilitätsprüfung erfolgt in Schritt 262 ein Soll/Ist-Vergleich, in Schritt 264 wird ein aktueller Sollwert errechnet, und durch Schritt 266 wird eine der Betätigung der Bedienungsorgane entsprechende Änderung der Vorgaben für die Ansteuerkreise 26, 28 vorgenommen.

Die Bedienungsperson kann durch eine Eingabe festlegen, daß ein Makro erstellt wird, durch den die Änderungen der neuen Sollwerte in ihrer zeitlichen Folge abgespeichert werden, um einen späteren Sequencing-Betrieb zu ermöglichen, bei dem die Änderungen der Sollwerte in der vorgegebenen zeitlichen Folge abgearbeitet werden. Dies ermöglicht einen automatischen Betrieb des Fahrzeuges, bei dem kein Eingriff der Bedienungsperson erforderlich ist. Ein solcher Sequencing-Betrieb ist dann von Vorteil, wenn das Fahrzeug wiederholt identische Arbeitsabläufe ausführen soll.

In Schritt 268 wird abgefragt, ob ein Makro erstellt werden soll. Wenn ja, erfolgt in Schritt 270 eine Aufnahme der Einzelsequenz und Ablage in dem Makrospeicher. Durch Schritt 272 wird die Monitor-Anzeige aktualisiert.

Stellt Schritt 252 keine Veränderung der Vorgaben durch die Bedienungselemente fest, so wird durch Schritt 274 überprüft, ob in der Elektronikeinheit Rechnerkapazität frei ist. Wenn nicht, werden durch Schritt 276 die Sollwerte unverändert zum Steuern und Regeln beibehalten. Ist hingegen Rechnerkapazität verfügbar, so erfolgt durch die Schritte 278 und 280 eine Überprüfung der Sensorik und Aktuatorik gemäß Fig. 2c sowie eine Aktualisierung der Monitor-Anzeige.

Das Ergebnis der in Fig. 2e dargestellten Routine wird durch Schritt 282 in dem Statusregister und der Diagnosedatei (Logbuch) abgelegt. Durch die Schritte 284 und 286 wird die Routine so lange aufrecht erhalten, bis entweder erneut ein Bedienungselement betätigt wurde (neue Sollwertvorgabe) oder der Normalbetriebsmodus des Fahrzeuges beendet ist.

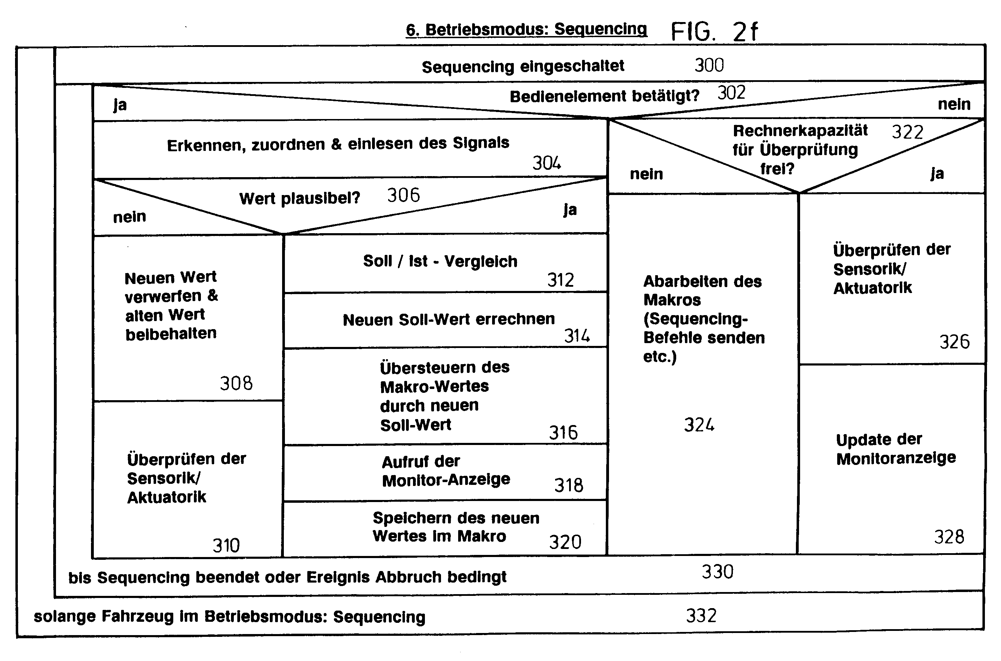

Fig. 2f stellt das Flußdiagramm für einen Sequencing-Betriebsmodus des Fahrzeuges dar, in dem ein vorgegebener, in der Elektronikeinheit gespeicherter Makro für einen bestimmten Arbeitsablauf abgearbeitet wird. In das automatische Abarbeiten kann jedoch durch Betätigung eines Bedienungselementes eingegriffen werden. Normalfunktionseingaben übersteuern immer eine Sequencing-Befehlsfolge.

Schritt 300 stellt zunächst fest, ob der Sequencing-Betrieb durch die Bedienungsperson vorgegeben wurde. Dann wird in Schritt 302 geprüft, ob ein Bedienungselement betätigt wurde. Ist dies der Fall, so folgt der Algorithmus in seinen Schritten 304 bis 314 im wesentlichen den bereits anhand der Fig. 2e beschriebenen Schritten 254 bis 264. In Schritt 316 wird der bisherige Makro-Wert durch den neuen Sollwert ersetzt, was durch Schritt 318 auf dem Monitor angezeigt wird. Gegebenenfalls nach einer Bestätigung durch die Bedienungsperson wird in Schritt 320 der neue Wert im Makro gespeichert.

Wurde kein Bedienungselement betätigt, so prüft Schritt 322, ob Rechnerkapazität frei ist. Wenn nicht, wird in Schritt 324 lediglich der Makro abgearbeitet. Ist Rechnerkapazität frei, so erfolgt in den Schritten 326 und 328 eine Überprüfung der Sensorik und Aktuatorik gemäß Fig. 3c und eine Aktualisierung der Monitor-Anzeige. Durch die Schritte 330 und 332 wird die Routine so lange aufrecht erhalten, bis die Änderung der Bedienungselementvorgabe vollständig abgearbeitet, eine Störung registriert wird oder der Sequencing-Betriebsmodus des Fahrzeuges beendet ist.

Anhand der Fig. 2g wird die Routine für das Abstellen des Fahrzeuges beschrieben. Zunächst wird in Schritt 350 geprüft, ob der Zündschlüssel seine "Aus"-Position einnimmt. Ist dies der Fall, so erfolgt durch die Schritte 352, 354 und 356 eine Meldung des Arbeitsendes auf dem Monitor, eine Sicherung der Diagnosedaten und eine Anzeige der notwendigen Wartungs- und Instandhaltungsarbeiten auf dem Monitor. Durch Schritt 358 schalten sich die Controller selbst ab (shutdown). Diese dauert an, solange der Zündschlüssel in "Aus"-Position bleibt (Schritt 360) und eine vorgebbare Zeitspanne T nicht abgelaufen ist (Schritt 362). Während des Abarbeitens der Routine gemäß der Schritte 352 bis 364 wird die Spannungsversorgung der Elektronikeinheit durch einen Haltespannungskreis aufrechterhalten. Nach Ablauf der Zeitspanne T wird durch Schritt 364 die Versorgungsspannung abgeschaltet.

Befindet sich der Zündschlüssel nicht in "Aus"-Position, so wird durch Schritt 366 abgefragt, ob die Versorgungsspannung an der Steuereinrichtung anliegt. Ist dies der Fall, so überführen in Schritt 368 die Controller das Gesamtsystem in einen sicheren Zustand, und in Schritt 370 wird über den Monitor die Bedienungsperson gefragt, ob die Arbeiten fortzusetzen sind. Bestätigt die Bedienungsperson dies, so wird das System durch Schritt 372 ohne erneute Initialisierung in seinen Normalbetriebsmodus zurückgeführt. Andernfalls wird der Algorithmus durch Schritt 374 auf die normale Routine der Abschlußarbeiten geleitet, wie sie anhand der Schritte 352 bis 364 beschrieben wurde.

Wird in Schritt 366 festgestellt, daß die Spannungsversorgung fehlt, so wird ein Haltekreis zur Aufrechterhaltung der Spannungsversorgung für die Steuereinrichtung aktiv, und die Schritte 376 und 378 ermöglichen einen Rückfall der elektronischen Komponenten und eine Überführung des Fahrzeugs in einen sicheren Zustand, in dem ein Anhalten und Abstellen des Fahrzeugs auch ohne elektrische Hilfsmittel erfolgen kann.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen.

Die Erfindung wurde zwar insbesondere im Hinblick auf die Steuerung der Antriebsmaschine und ein stufenlos verstellbares Getriebe entwickelt und vorstehend beschrieben. Es können jedoch auch weitere Bedienungs- und Steuerfunktionen einbezogen werden. Die Einbeziehung weiterer Bedienungselemente sowie der diesen zugeordneten elektrischen und elektronischen Kreise ist besonders vorteilhaft, wenn sie zu einer Entlastung der Bedienungsperson führt.

Solche weiteren Bedienungselemente dienen beispielsweise der Einstellung eines Hubwerks des Fahrzeugs. Es können jedoch auch im Fahrzeug angeordnete Bedienungselemente einbezogen werden, die der Bedienung von Anbaugeräten wie Ladern oder landwirtschaftlicher Bearbeitsmaschinen dienen.

## Patentansprüche

1. Steuerverfahren für die Steuereinrichtung eines Kraftfahrzeugantriebs, welche enthält:
- Bedienungselemente (10, 12, 14, 16, 18, 20) zur Einstellung von Betriebszuständen für eine Antriebsmaschine (32), für ein wenigstens teilweise stufenlos verstellbares Getriebe (30) und/oder für Bremsen (58) und/oder für Anbaugeräte und dergleichen,
- den Bedienungselementen (10, 12, 14, 16, 18, 20) zugeordnete elektrische Kreise zur Umsetzung der Einstellwerte der Bedienungselemente (10, 12, 14, 16, 18, 20) in elektrische Sensorsignale,
- wenigstens eine Elektronikeinheit (24) mit den Bedienungselementen (10, 12, 14, 16, 18, 20) zugeordneten Controllern zur Verrechnung der Sensorsignale in Stellsignale,
- der Antriebsmaschine (32) und/oder dem Getriebe (30) zugeordnete elektronische Ansteuerkreise (26, 28), die die Antriebsmaschine (32) bzw. das Getriebe (30) in Abhängigkeit der Stellsignale ansteuern,
- ein Bussystem (33), durch das die Elektronikeinheit (24) und die Ansteuerkreise (26, 28) miteinander kommunizieren, und
- wenigstens eine an das Bussystem (33) angeschlossene Ausgabeeinheit (84) zur Anzeige von Informationen,
mit folgenden Verfahrensschritten:
- die Elektronikeinheit (24) mit ihren Controllern, das Bussystem (33), die Sensorsignale und/oder die Ansteuerkreise (26, 28) werden auf ihre Betriebszustände hin überprüft, und das Ergebnis der Überprüfung wird in Form von Status-Flags gespeichert,
- aufgrund der aktuellen Status-Flags wird die Steuereinrichtung nach vorgebbaren Kriterien diagnostiziert und bewertet, und
- das Bewertungsergebnis wird über die Ausgabeeinheit (44) der Bedienungsperson angezeigt,
dadurch gekennzeichnet, daß die Steuereinrichtung aufgrund des Bewertungsergebnisses wenigstens einen Betriebsmodus oder eine Ausweichfunktion automatisch auswählt und auf der als Bildschirm ausgebildeten Ausgabeeinheit (44) anzeigt, und daß ein vorgeschlagener Betriebsmodus oder eine vorgeschlagene Ausweichfunktion wahlweise durch die Steuereinheit automatisch aktiviert oder durch die Bedienungsperson über eine Eingabeeinrichtung (84) auswählbar oder abänderbar ist.

2. Verfahren nach Anspruch 1, dadurch gekennzeichnet, daß der Betriebsmodus ein Normalbetriebsmodus oder ein Sequenzing-Betriebsmodus und die Ausweichfunktion eine Rekalibrierung, eine Ersatz- oder eine Notfunktion ist.

3. Verfahren nach Anspruch 1 oder 2, dadurch gekennzeichnet, daß die Steuereinrichtung anhand des Bewertungsergebnisses überprüft, ob ein Fehlerzustand bei der Elektronikeinheit (24) mit ihren Controllern, dem Bussystem (33), den Sensorsignalen und/oder den Ansteuerkreisen (26, 28) vorliegt und ob eine vorgebbare Ersatzfunktion für einen geeigneten Betriebsmodus einsetzbar ist, und daß die Steuereinrichtung gegebenenfalls diese Ersatzfunktion automatisch aktiviert und der Bedienungsperson über die Ausgabeeinheit anzeigt.

4. Verfahren nach Anspruch 3, dadurch gekennzeichnet, daß für den Fall, daß keine geeignete Ersatzfunktion verfügbar ist, die Steuervorrichtung anhand des Bewertungsergebnisses wenigstens eine vorgebbare Notfunktion ermittelt und diese der Bedienungsperson anzeigt, so daß die Bedienungsperson über eine geeignete Eingabevorrichtung (84) die gewünschte Notfunktion auswählen und/oder aktivieren kann.

5. Verfahren nach einem der Ansprüche 1 bis 4, dadurch gekennzeichet, daß die Steuervorrichtung prüft, ob ein Fehlerzustand vorliegt, der auf einen Kalibrierfehler zurückzuführen ist, und gegebenenfalls automatisch eine Rekalibrierung vornimmt.

6. Verfahren nach einem der Ansprüche 1 bis 5, dadurch gekennzeichet, daß wenigstens ein Teil der Verfahrensschritte nach Ablauf vorgebbarer Zeitintervalle fortlaufend wiederholt wird.

7. Verfahren nach einem der Ansprüche 1 bis 6, dadurch gekennzeichet, daß eine Folge von durch die Bedienungselemente vorgebbaren Einstellsignalen automatisch in einem Datenspeicher abgelegt werden und daß die abgelegten Einstellsignale zur automatischen Ansteuerung des Kraftfahrzeuges wieder ausgelesen werden (Sequencing-Mode).

8. Verfahren nach Anspruch 7, dadurch gekennzeichnet, daß die Ansteuerungsfunktionen des Sequencing-Mode von der Bedienungsperson unterbrochen werden können, so daß die Ansteuerung in einem durch die Bedienungsperson über die Bedienungselemente direkt steuerbaren Modus überführbar ist (Normal-Mode).

9. Verfahren nach einem der Ansprüche 1 bis 8, dadurch gekennzeichnet, daß bei Vorliegen eines oder mehrerer Fehlerzustände der bzw. die betroffenen Controller und/oder Ansteuerkreise abgeschaltet werden und/oder ein Ersatzsteuerkreis aktiviert wird, der Sensorsignale wenigstens eines durch die Fehlerzustände nicht betroffenen Bedienungselements (10, 12, 14, 16, 18, 20) auswertet, und aus diesen ersatzweise geeignete Stellsignale für die Ansteuerkreise (26, 28) ableitet.

10. Verfahren nach einem der Ansprüche 1 bis 9, dadurch gekennzeichnet, daß als Bedienungselemente wenigstens eine Geschwindigkeits-Vorwahleinrichtung (14) und wenigstens ein Fußgaspedal (12) mit zugeordneten Abtastelektroniken und Controllern vorgesehen sind, wobei durch die Geschwindigkeits-Vorwahleinrichtung (14) eine gewünschte Getriebeabtriebsdrehzahl einstellbar ist, und wobei durch das Fußgaspedal (12) einerseits mittels seines zugeordneten Controllers eine Übersteuerung der Voreinstellung der Getriebeabtriebsdrehzahl und andererseits eine unmittelbare Beeinflussung der Antriebsmaschinendrehzahl möglich ist, und daß bei Vorliegen eines Fehlerzustandes der dem Fußgaspedal (12) und/oder der Geschwindigkeits-Vorwahleinrichtung (14) zugeordneten Abtastelektronik und/oder des zugeordneten Controllers die Elektronikeinheit (24) die von dem oder den Controllern abgegebenen Stellsignale auf konstante Werte setzt und wenigstens einen Ersatzregelkreis aktiviert, der Änderungen der Antriebsmaschinendrehzahl infolge einer Fußgasbetätigung erfaßt und das Getriebe (30) derart ansteuert, daß die Antriebsmaschinendrehzahl als Kriterium für eine Änderung der Getriebeabtriebsdrehzahl herangezogen wird.

11. Verfahren nach einem der Ansprüche 1 bis 10, dadurch gekennzeichnet, daß als Bedienungselemente wenigstens eine Antriebsmaschinendrehzahl-Vorwahleinrichtung (10), der wahlweise eine Abtastelektronik und ein Controller zugeordnet ist, und wenigstens ein Fußgashebel (12), dem eine Abtastelektronik und ein Controller zugeordnet ist, vorgesehen sind, wobei durch die Antriebsmaschinendrehzahl-Vorwahleinrichtung (10) eine gewünschte Antriebsmaschinendrehzahl einstellbar ist, und wobei durch das Fußgaspedal (12) mittels des zugeordneten Controllers eine Übersteuerung der Voreinstellung der Antriebsmaschinendrehzahl möglich ist, und daß bei Vorliegen eines Fehlerzustandes der dem Fußgashebel (12) oder der Antriebsmaschinendrehzahl-Vorwahleinrichtung (10) zugeordneten Abtastelektronik und/oder dem jeweils zugeordneten Controller die Elektronikeinheit (24) die von einem der Controller abgegebenen fehlerhaften Ausgangssignale auf einen konstanten Wert setzt und wenigstens einen Ersatzregelkreis aktiviert, der ein Stellsignal für die Antriebsmaschinendrehzahl aus dem fehlerfrei arbeitenden Controller ableitet.

12. Verfahren nach einem der Ansprüche 1 bis 11, dadurch gekennzeichnet, daß als Bedienungselemente wenigstens eine Geschwindigkeits-Vorwahleinrichtung (14) und wenigstens eine Reversiereinrichtung (18) mit zugeordneten Abtastelektroniken und Controllern vorgesehen sind, wobei durch die Geschwindigkeits-Vorwahleinrichtung (14) eine gewünschte Getriebeabtriebsdrehzahl zwischen einer maximalen Vorwärts- und einer maximalen Rückwärtsgeschwindigkeit einstellbar ist, und wobei durch die Reversiereinrichtung (18) die jeweilige Fahrtrichtung bei vorgebbarer Fahrzeugsollgeschwindigkeit umkehrbar ist, und daß bei Vorliegen eines Fehlerzustandes der der Reversiereinrichtung (18) oder der Geschwindigkeits-Vorwahleinrichtung (14) zugeordneten Abtastelektronik und/oder des jeweils zugeordneten Controllers die Elektronikeinheit (24) die von einem der Controller abgegebenen fehlerhaften Stellsignale unterdrückt und durch einen Ersatzregelkreis den fehlerfrei arbeitenden Controller als ausschließlichen Vorwärts-Rückwärts-Umschalter aktiviert.

13. Verfahren nach einem der Ansprüche 1 bis 12, dadurch gekennzeichnet, daß als Bedienungselemente wenigstens ein Bremspedal (20) mit zugeordneter Abtastelektronik und Controller vorgesehen ist, wobei die Elektronikeinheit (24) das gewonnene Bremssignal derart auswertet, daß in einem ersten Betätigungsbereich des Bremspedals (20) die Übersteuerung einer Voreinstellung der Getriebeabtriebsdrehzahl im Sinne einer Geschwindigkeitsreduzierung (Retarder) erfolgt und mit Überschreiten eines Schwellwertes, bei dem die Wirkung der Betriebsbremsen einsetzt, das Getriebe (30) geöffnet wird.

14. Verfahren nach Anspruch 13, dadurch gekennzeichnet, daß das Getriebe (30) durch die Elektronikeinheit (24) derart gesteuert wird, daß in einem zweiten Betätigungsbereich des Bremspedals (20), der oberhalb des Schwellwertes liegt, die Getriebeabtriebsdrehzahl synchron zur Fahrgeschwindigkeit mitgeführt wird.

15. Verfahren nach Anspruch 13 oder 14, dadurch gekennzeichnet, daß das wenigstens eine Bremspedal (20) mit wenigstens einem Bremslichtschalter (74, 76) in Verbindung steht und daß bei Vorliegen eines Fehlerzustandes der dem Bremspedal (20) zugeordneten Abtastelektronik und/oder dem zugeordneten Controller die Elektronikeinheit die Retarderfunktion des Getriebes (30) außer Betrieb setzt und einen Ersatzsteuerkreis aktiviert, der das Bremslichtsignal oder ein entsprechendes Signal als Initialereignis zur Öffnung des Getriebes (30) ansieht.

16. Verfahren nach einem der Ansprüche 1 bis 15, dadurch gekennzeichnet, daß jeder erkannte Fehlerzustand in ein Logbuch der Elektronikeinheit (24) eingetragen wird, aus dem er sich später abrufen läßt.

17. Verfahren nach einem der Ansprüche 1 bis 16, dadurch gekennzeichnet, daß das Vorliegen eines Fehlerzustands über eine optische und/oder akustische Warneinrichtung der Bedienungsperson gemeldet wird.

18. Steuereinrichtung nach Anspruch 17, dadurch gekennzeichnet, daß die Warneinrichtung die Art des Fehlerzustandes anzeigt und der Bedienungsperson Maßnahmen zu dessen Abhilfe vorschlägt.

19. Steuereinrichtung zur Durchführung des Verfahrens nach einem der Ansprüche 1 bis 18, gekennzeichnet durch
- Bedienungselemente (10, 12, 14, 16, 18, 20) zur Einstellung von Betriebszuständen für eine Antriebsmaschine (32), für ein wenigstens teilweise stufenlos verstellbares Getriebe (30) und/oder für Bremsen (58) und/oder für Anbaugeräte und dergleichen,
- den Bedienungselementen (10, 12, 14, 16, 18, 20) zugeordnete elektrische Kreise (mit Schaltern und Sensoren) zur Umsetzung der Einstellwerte der Bedienungselemente (10, 12, 14, 16, 18, 20) in elektrische Sensorsignale,
- wenigstens eine Elektronikeinheit (24) mit den Bedienungselementen (10, 12, 14, 16, 18, 20) zugeordneten Controllern zur Verrechnung der Sensorsignale in Stellsignale,
- der Antriebsmaschine (32) und/oder dem Getriebe (30) zugeordnete elektronische Ansteuerkreise (26, 28), die die Antriebsmaschine (32) bzw. das Getriebe (30) in Abhängigkeit der Stellsignale ansteuern,
- ein Bussystem, durch das die Elektronikeinheit (24) und die Ansteuerkreise (26, 28) miteinander kommunizieren,
- einen an das Bussystem angeschlossenen Bildschirm zur Anzeige von Informationen und
- eine Eingabevorrichtung zur unmittelbaren Kommunikation mit der Bildschirmanzeige.

20. Steuereinrichtung nach Anspruch 19, dadurch gekennzeichnet, daß die den Bedienungselementen (10, 12, 14, 16, 18, 20) zugeordneten Controller und/oder die Ansteuerkreise (26, 28) und/oder ein die Bildschirmanzeige (44) steuernder Mikroprozessor (82) als autarke Einheiten am Bussystem angeschlossen sind.

## Claims

1. Control process for the control device of a motor vehicle drive, which contains:
- operating elements (10, 12, 14, 16, 18, 20) for setting operational conditions for a driving engine (32), for a gear (30) which is infinitely variable at least in part and/or for brakes (58) and/or for attached implements or the like,
- electrical circuits associated with the operating elements (10, 12, 14, 16, 18, 20) for converting the set values of the operating elements (10, 12, 14, 16, 18, 20) into electrical sensor signals,
- at least one electronic unit (24) with the controllers associated with the operating elements (10, 12, 14, 16, 18, 20) for computational conversion of the sensor signals into adjusting signals,
- associated with the driving engine (32) and/or the gear (30), electronic control circuits (26, 28) which control the driving engine (32) or the gear (30) as a function of the adjusting signals,
- a bus system (33) through which the electronic unit (24) and the control circuits (26, 28) communicate with one another, and
- at least one output unit (84) for the display of information connected to the bus system (33),
with the following process steps:
- the electronic unit (24) with its controllers, the bus system (33), the sensor signals and/or the control circuits (26, 28) are checked with regard to their operational conditions and the result of the check is stored in the form of status flags,
- on the basis of the current status flags the control device is diagnosed and evaluated, and
- the evaluation result is displayed to the operator via the output unit (44),
characterised in that on the basis of the evaluation result, the control device automatically selects at least one operational mode or an alternative function and displays it on the output unit (44) constructed as a viewing screen, and that optionally a proposed operational mode or a proposed alternative function is activated automatically by the control unit or can be selected or modified by the operator via an input device (84).

2. Process according to claim 1, characterised in that the operational mode is a normal operational mode or a sequencing operational mode and the alternative function is a recalibration, a substitute function or an emergency function.

3. Process according to claim 1 or 2, characterised in that on the basis of the evaluation result the control device checks whether an error condition is present in the electronic unit (24) with its controllers, the bus system (33), the sensor signals and/or the control circuits (26, 28) and whether a specifiable substitute function for a suitable operational mode can be used, and that if need be the control device automatically activates this substitute function and displays it to the operator via the output unit.

4. Process according to claim 3, characterised in that in the event that no suitable substitute function is available, on the basis of the evaluation result the control device determines at least one specifiable emergency function and displays this to the operator so that the operator can select and/or activate the desired emergency function via a suitable input device (84).

5. Process according to one of the claims 1 to 4, characterised in that the control device checks whether an error condition is present which is attributable to a calibration fault and if need be automatically performs a recalibration.

6. Process according to one of the claims 1 to 5, characterised in that at least one part of the process steps is repeated continuously after expiry of specifiable time intervals.

7. Process according to one of the claims 1 to 6, characterised in that a sequence of adjusting signals specifiable by the operating elements are deposited automatically in a data store and that the deposited adjusting signals are read out again (sequencing mode) for the automatic control of the motor vehicle.

8. Process according to claim 7, characterised in that the control functions of the sequencing mode can be interrupted by the operator so that the control can be transferred to a mode (normal mode) directly controllable by the operator via the operating elements.

9. Process according to one of the claims 1 to 8, characterised in that in the presence of one or several error conditions the affected controller or controllers and/or control circuits are switched off and/or a substitute control circuit is activated which evaluates sensor signals of at least one operating element (10, 12, 14, 16, 18, 20) not affected by the error conditions and from these derives as a substitute suitable adjusting signals for the control circuits (26, 28).

10. Process according to one of the claims 1 to 9, characterised in that at least one speed preselection device (14) and at least one foot accelerator pedal (12) with associated sensor electronic and controllers are provided as operating elements, wherein a desired gear output speed can be set by means of the speed preselection device (14) and wherein by means of the foot accelerator pedal (12) it is possible on the one hand to override the presetting of the gear output speed by means of its associated controller and on the other hand to control the driving engine speed directly, and that in the presence of an error condition in the sensor electronics associated with the foot accelerator pedal (12) and/or the speed preselection device (14) and/or of the associated controller, the electronic unit (24) sets the adjusting signals produced by the controller or controllers to constant values and activates at least one substitute control circuit which captures changes in the driving engine speed as a consequence of foot accelerator actuation and controls the gear (30) in such a manner that the driving engine speed is used as a criterion for a change in the gear output speed.

11. Process according to one of the claims 1 to 10, characterised in that at least one driving engine speed preselection device (10), with which optionally sensor electronics and a controller is associated, and at least one foot accelerator pedal (12), with which a sensor electronics and a controller is associated, are provided as operating elements, wherein a desired driving engine speed can be set by means of the driving engine speed preselection device (10), and wherein by means of the foot accelerator (12) it is possible to override the presetting of the driving engine speed by means of the associated controller, and that in the presence of an error condition of the sensor electronics associated with the foot accelerator lever (12) or the driving engine speed preselection device (10) and/or the respectively associated controller, the electronic unit (24) sets the defective output signals produced by one of the controllers to a constant value and activates at least one substitute control circuit which derives an adjusting signal for the driving engine speed from the controller operating without error.

12. Process according to one of the claims 1 to 11, characterised in that at least one speed preselection device (14) and at least one reversing device (18) with associated sensor electronics and controllers are provided as operating elements, wherein a desired gear output speed can be set between a maximum forward speed and a maximum reversing speed by means of the speed preselection device (14), and wherein by means of the reversing device (18) the driving direction at any time can be reversed at a specifiable vehicle target speed, and that in the presence of an error condition of the sensor electronics associated with the reversing device (18) or the speed preselection device (14) and/or of the respectively associated controller, the electronic unit (24) suppresses the defective adjusting signals produced by one of the controllers and by means of a substitute control circuit activates the controller operating without error as the exclusive forward-reversing switch.

13. Process according to one of the claims 1 to 12, characterised in that at least one brake pedal (20) with associated sensor electronics and controller is provided as operating element, wherein the electronic unit (24) evaluates the braking signal obtained in such a manner that in a first operating range of the brake pedal (20) presetting of the gear output speed in the sense of a speed reduction (retarder) is overridden and on exceeding a threshold value, at which the action of the operating brakes sets in, the gear (30) is released.

14. Process according to claim 13, characterised in that the gear (30) is controlled by means of the electronic unit (24) in such a manner that in a second actuating range of the brake pedal (20), which lies above the threshold value, the gear output speed is entrained synchronously with the driving speed.

15. Process according to claim 13 or 14, characterised in that at least the one brake pedal (20) is connected to at least one brake light switch (74, 76) and that in the presence of an error condition in the sensor electronics associated with the brake pedal (20) and/or the associated controller, the electronic unit puts the retarder function of the gear (30) out of operation and activates a substitute control circuit which interprets the brake light signal or a corresponding signal as the initiating event for releasing the gear (30).

16. Process according to one of the claims 1 to 15, characterised in that each error condition recognised is entered in a log book of the electronic unit (24) from which it can later be recalled.

17. Process according to one of the claims 1 to 16, characterised in that the presence of an error condition is reported to the operator via an optical and/or acoustic warning device.

18. Control device according to claim 17, characterised in that the warning device indicates the type of error condition and the operator proposes measures for remedying it.

19. Control device for carrying out the process according to one of the claims 1 to 18, characterised by
- operating elements (10, 12, 14, 16, 18, 20) for setting operating conditions for a driving engine (32), for a gear (30) which is infinitely variable at least in part and/or for brakes (58) and/or for attached implements or the like,
- electrical circuits (with switches and sensors) associated with the operating elements (10, 12, 14, 16, 18, 20) for converting the set values of the operating elements (10, 12, 14, 16, 18, 20) into electrical sensor signals,
- at least one electronic unit (24) with the controllers associated with the operating elements (10, 12, 14, 16, 18, 20) for computational conversion of the sensor signals into adjusting signals,
- associated with the driving engine (32) and/or the gear (30), electronic control circuits (26, 28) which control the driving engine (32) or the gear (30) as a function of the adjusting signals,
- a bus system (33) through which the electronic unit (24) and the control circuits (26, 28) communicate with one another,
- a viewing screen connected to the bus system for the display of information, and
- an input device for direct communication with the screen display.

20. Control device according to claim 19, characterised in that the controllers associated with the operating elements (10, 12, 14, 16, 18, 20) and/or the control circuits (26, 28) and/or a microprocessor (82) controlling the screen display (44) are connected to the bus system as independent units.

## Revendications

1. Procédé de commande pour le dispositif de commande d'un système d'entraînement de véhicule automobile, qui contient :
- des éléments de commande (10,12,14,16,18,20) pour régler des états de fonctionnement pour une machine motrice (32), pour une transmission (30) réglable au moins partiellement progressivement et/ou pour des freins (58) et/ou pour des outils portés et analogues,
- des circuits électriques associés aux éléments de commande (10,12,14,16,18,20) pour convertir les valeurs de réglage des éléments de commande (10,12,14,16,18,20) en des signaux électriques de détection,
- au moins une unité électronique (24) équipée de contrôleurs associés aux éléments de commande (10,12,14,16,18, 20) pour convertir les signaux de détection en signaux de réglage,
- des circuits de commande électronique (26,28), qui sont associés à la machine motrice (32) et/ou à la transmission (30) et qui commandent la machine motrice (32) ou la transmission (30) en fonction des signaux de réglage,
- un système de bus (33), grâce auquel l'unité électronique (24) et les circuits de commande (26,28) peuvent communiquer entre eux, et
- au moins une unité de sortie (84) raccordée au système de bus (33) pour l'affichage d'informations,
comportant les étapes opératoires suivantes :
- les états de fonctionnement de l'unité électronique (24) et ses contrôleurs, du système de bus (33), des signaux de détection et/ou des circuits de commande (27,28) sont contrôlés, et le résultat du contrôle est mémorisé sous la forme de drapeaux d'état,
- sur la base des drapeaux actuels d'état, le dispositif de commande est diagnostiqué et évalué selon des critères pouvant être prédéterminés, et
- le résultat de l'évaluation est indiqué à l'opérateur au moyen de l'unité de sortie (44),
caractérisé en ce que le dispositif de commande sélectionne automatiquement au moins un mode de fonctionnement ou une fonction de remplacement sur la base du résultat d'évaluation et produit un affichage sur l'unité de sortie (44) réalisée sous la forme d'un écran, et qu'un mode de fonctionnement proposé ou une fonction de remplacement proposée est activé au choix automatiquement par l'unité de commande ou peut être sélectionné ou modifié par l'opérateur, par l'intermédiaire d'un dispositif d'entrée (84).

2. Procédé selon la revendication 1, caractérisé en ce que le mode de fonctionnement est un mode de fonctionnement normal ou un mode de fonctionnement séquentiel et la fonction de remplacement est un réétalonnage, une fonction de remplacement ou une fonction d'urgence.

3. Procédé selon la revendication 1 ou 2, caractérisé en ce que le dispositif de commande vérifie, sur la base du résultat d'évaluation, si un état d'erreur est présent dans l'unité électronique (24) équipée de ses contrôleurs, dans le système de bus (33), dans les signaux de détection et/ou dans les circuits de commande (26,28) et si une fonction de remplacement peut être introduite pour un mode de fonctionnement approprié, et qu'éventuellement le dispositif de commande active automatiquement cette fonction de remplacement et l'indique à l'opérateur au moyen de l'unité de sortie.

4. Procédé selon la revendication 3, caractérisé en ce que, dans le cas où aucune fonction d'emplacement appropriée n'est disponible, le dispositif de commande détermine, sur la base du résultat d'évaluation, au moins une fonction d'urgence pouvant être prédéterminée et l'indique à l'opérateur de sorte que ce dernier peut sélectionner et/ou activer la fonction d'urgence désirée, par l'intermédiaire d'un dispositif d'entrée approprié (84).

5. Procédé selon la revendication 1 à 4, caractérisé par le fait que le dispositif de commande vérifie si l'on est en présence d'un état d'erreur, qui est imputable à une erreur d'étalonnage, et éventuellement exécute automatiquement un réétalonnage.

6. Procédé selon l'une des revendications 1 à 5, caractérisé par le fait qu'au moins une partie des étapes opératoires est répétée de façon permanente après l'écoulement d'intervalles de temps pouvant être prédéterminés.

7. Procédé selon l'une des revendications 1 à 6, caractérisé en ce qu'une suite de signaux de réglage pouvant être prédéterminés par les éléments de commande, est mémorisée dans une mémoire de données et que les signaux de réglage mémorisés sont à nouveau lus pour la commande automatique du véhicule automobile (mode séquentiel).

8. Procédé selon la revendication 7, caractérisé en ce que les fonctions de commande du mode séquentiel peuvent être interrompus par l'opérateur de sorte que la commande peut être transférée sur un mode directement commandable par l'opérateur, par l'intermédiaire des éléments de commande (mode normal).

9. Procédé selon l'une des revendications 1 à 8, caractérisé en ce que, dans le cas de la présence d'un ou de plusieurs états d'erreurs, le ou les contrôleurs et/ou circuits de commande concernés sont débranchés et/ou un circuit de commande de remplacement est activé, ce circuit évaluant les signaux de détection d'au moins un élément de commande (10,12,14,16,18,20) non concerné par les états d'erreurs, et dérivant, de ces signaux de détection, à titre de remplacement, des signaux de réglage appropriés pour les circuits de commande (26,28).

10. Procédé selon l'une des revendications 1 à 9, caractérisé en ce qu'il est prévu, comme élément de commande, au moins un dispositif de présélection de vitesse (14) et au moins une pédale d'accélérateur (12) à laquelle sont associés des systèmes électroniques d'exploration et des contrôleurs, une vitesse de rotation désirée de sortie de la transmission pouvant être réglée au moyen du dispositif de présélection de vitesse (14), tandis qu'au moyen de la pédale d'accélérateur (12) on peut réaliser d'une part une commande prioritaire de préréglage de la vitesse de rotation de sortie de la transmission, au moyen du contrôleur associé à la pédale, et d'autre part on peut influer directement sur la vitesse de rotation de la machine motrice, et que dans le cas de la présence d'un état d'erreur du système électronique d'exploration, qui est associé à la pédale d'accélérateur (12) et/ou au dispositif de présélection de vitesse (14), et/ou du contrôleur associé, l'unité électronique (24) règle sur des valeurs constantes les signaux de réglage délivrés par le ou les contrôleurs, et active au moins un circuit de réglage de remplacement, qui détecte des modifications de la vitesse de rotation de la machine motrice sur la base d'un actionnement de la pédale d'accélérateur et commande la transmission (30) de telle sorte que la vitesse de rotation de la machine motrice est utilisée en tant que critère pour une modification de la vitesse de rotation de sortie de la transmission.

11. Procédé selon l'une des revendications 1 à 10, caractérisé en ce qu'il est prévu, comme éléments de commande, au moins un dispositif (10) de présélection de la vitesse de rotation de la machine motrice, auquel sont associés au choix un système électronique d'exploration et un contrôleur, et au moins un levier d'accélérateur (12), auquel sont associés un système électronique d'exploration et un contrôleur, une vitesse de rotation désirée de la machine motrice pouvant être réglée à l'aide du dispositif (10) de présélection de la vitesse de rotation de la machine motrice, tandis qu'au moyen de la pédale d'accélérateur (12), il est possible, à l'aide du contrôleur associé, de réaliser une commande prioritaire du préréglage de la vitesse de rotation de la machine motrice, et que dans le cas de la présence d'un état d'erreur dans le système électronique d'exploration, associé à la pédale d'accélérateur (12) ou au dispositif (10) de préréglage de la vitesse de rotation de la machine motrice, et/ou du contrôleur respectivement associé, l'unité électronique (24) règle à une valeur constante les signaux de sortie affectés d'une erreur et délivrés par l'un des contrôleurs, et active au moins un circuit de réglage de remplacement, qui dérive un signal de réglage pour la vitesse de rotation de la machine motrice à partir du contrôleur travaillant sans erreur.

12. Procédé selon l'une des revendications 1 à 11, caractérisé en ce qu'il est prévu, comme éléments de commande, au moins un dispositif de préréglage de vitesse (14) et au moins un dispositif d'inversion de marche (18), auquel sont associés des systèmes électroniques d'exploration et des contrôleurs, une vitesse de rotation de sortie désirée de la transmission pouvant être réglée au moyen du dispositif de présélection de vitesse (14) entre une vitesse maximale de marche avant et une vitesse maximale de marche arrière, tandis que la direction respective de déplacement peut être inversée par le dispositif d'inversion de marche (18), pour une vitesse de consigne du véhicule pouvant être prédéterminée, et que dans le cas de la présence d'un état d'erreur du système électronique d'exploration, qui est associé au dispositif d'inversion de marche (18) ou au dispositif de présélection de vitesse (14), et/ou du contrôleur respectivement associé, l'unité électronique (24) supprime les signaux de réglage défectueux, délivrés par l'un des contrôleurs et, au moyen d'un circuit de réglage de remplacement, active le contrôleur, qui travaille sans erreur, en tant que commutateur exclusif marche avant - marche arrière.

13. Procédé selon l'une des revendications 1 à 12, caractérisé en ce qu'il est prévu, comme éléments de commande, au moins une pédale de frein (20) à laquelle sont associés un système électronique d'exploration et un contrôleur, l'unité électronique (24) évaluant le signal de freinage obtenu de telle sorte que, dans une première plage d'actionnement de la pédale de frein (20), la commande prioritaire d'un préréglage de la vitesse de rotation de sortie de la transmission est exécutée dans le sens d'une réduction de la vitesse (ralentisseur) et que la transmission (30) est activée lors du dépassement d'une valeur de seuil, pour laquelle les freins de service entrent en action.

14. Procédé selon la revendication 13, caractérisé en ce que la transmission (30) est commandée par l'unité électronique (24) de telle sorte que, dans une seconde plage d'actionnement de la pédale de frein (20), qui est située au-dessus de la valeur de seuil, la vitesse de rotation de sortie de la transmission est asservie d'une manière synchrone à la fréquence de déplacement.

15. Procédé selon la revendication 13 ou 14, caractérisé en ce que la au moins une pédale de frein (20) est reliée à au moins un contacteur de feu-stop (74,76), et que dans le cas de la présence d'un état d'erreur dans le système électronique d'exploration, associé à la pédale de frein (20) et/ou dans le contrôleur associé, l'unité électronique met hors service la fonction de ralentisseur de la transmission (30) et active un circuit de commande de remplacement, qui considère le signal de feu-stop ou un signal correspondant en tant qu'évènement initial pour l'ouverture de la transmission (30).

16. Procédé selon l'une des revendications 1 à 15, caractérisé en ce que chaque état d'erreur identifié est consigné dans un livre d'enregistrement de l'unité électronique (24), d'où il peut être appelé ultérieurement.

17. Procédé selon l'une des revendications 1 à 16, caractérisé en ce que la présence d'un état d'erreur est signalée à l'opérateur par l'intermédiaire d'un dispositif d'avertissement optique et/ou acoustique.

18. Dispositif de commande selon la revendication 17, caractérisé en ce que le dispositif d'avertissement indique le type de l'état d'erreur et propose à l'opérateur des dispositions pour y remédier.

19. Dispositif de commande pour la mise en oeuvre du procédé selon l'une des revendications 1 à 18, caractérisé par
- des éléments de commande (10,12,14,16,18,20) pour régler des états de fonctionnement pour une machine motrice (32) pour une transmission (30) réglable au moins partiellement progressivement et/ou pour des freins (58) et/ou pour des outils portés et analogues,
- des circuits électriques associés aux éléments de commande (10,12,14,16,18,20) pour convertir les valeurs de réglage des éléments de commande (10,12,14,16,18,20) en des signaux électriques de détection,
- au moins une unité électronique (24) équipée de contrôleurs associés aux éléments de commande (10,12,14,16,18, 20) pour convertir les signaux de détection en signaux de réglage,
- des circuits de commande électronique (26,28), qui sont associés à la machine motrice (32) et/ou à la transmission (30) et qui commandent la machine motrice (32) ou la transmission (30) en fonction des signaux de réglage,
- un système de bus, grâce auquel l'unité électronique (24) et les circuits de commande (26,28) peuvent communiquer entre eux, et
- un écran raccordé au système de bus pour l'affichage d'informations, et
- un dispositif d'entrée pour établir une communication directe avec le dispositif d'affichage à écran.

20. Dispositif de commande selon la revendication 19, caractérisé en ce que les contrôleurs, qui sont associés aux éléments de commande (10,12,14,16,18,20), et/ou les circuits de commande (26,28) et/ou un microprocesseur (82), qui commande le dispositif d'affichage à écran (44) sont raccordés sous la forme d'unités indépendantes, au système de bus.
